# EUROPEAN PATENT SPECIFICATION

(11) **EP 4 372 945 B1**
(45) Date of publication and mention of the grant of the patent: **20.05.2026**
(21) Application number: 23207714.9
(22) Date of filing: 03.11.2023
(51) Int. Cl.: H02J 3/32, H02J 3/38

(54) **CONTROL METHOD FOR AN OFF-GRID ENERGY STORAGE SYSTEM, CONTROL DEVICE AND ENERGY STORAGE SYSTEM**
STEUERUNGSVERFAHREN FÜR EIN NETZUNABHÄNGIGES ENERGIESPEICHERSYSTEM, STEUERUNGSVORRICHTUNG UND ENERGIESPEICHERSYSTEM
PROCÉDÉ DE COMMANDE POUR UN SYSTÈME DE STOCKAGE D'ÉNERGIE HORS RÉSEAU, DISPOSITIF DE COMMANDE ET SYSTÈME DE STOCKAGE D'ÉNERGIE

(30) Priority: 04.11.2022 CN 202211380798
(43) Date of publication of application: 22.05.2024
(73) Proprietor: Xiamen Kehua Digital Energy Tech Co., Ltd., Xiamen, Fujian 361100 (CN)
(72) Inventor: HU, Bin, Xiamen 361100 (CN); LIN, Zhenhuang, Xiamen 361100 (CN); CHEN, Haisen, Xiamen 361100 (CN)
(74) Representative: Isarpatent

(56) References cited:
- WO-A1-2018/139164
- US-A1- 2017 047 740
- US-A1- 2021 281 072

## Description

### TECHNICAL FIELD

The present disclosure relates to the technical field of off-grid controlling, and more specifically relates to control methods for an off-grid energy storage system, control devices and energy storage systems.

### BACKGROUND

Power conversion system (PCS) can control the charging and discharging process of energy storage batteries and carry out alternating current (AC) and direct current (DC) conversion. In the absence of grid, PCS can directly power AC loads. An energy storage system (ESS) may include at least two PCS. ESS can operate in multiple modes in off-grid state. When an ESS operates in AC/DC parallel off-grid mode, due to the parallel connection of the AC sides and DC sides of PCSs, there may be problem of current imbalance of each PCS and problem of zero-sequence circulating current, which may affect the performance of the ESS.

US 2021/281072 A1 discloses an energy storage device for a power system. The energy storage device is electrically connected with a high voltage DC transmission grid. The energy storage device includes at least one energy storage element, at least one bidirectional inverter module, at least one medium frequency transformer and at least one bidirectional AC/DC conversion module. A DC terminal of each bidirectional inverter module is electrically connected with the corresponding energy storage element. A first transmission terminal of each medium frequency transformer is electrically connected with an AC terminal of the corresponding bidirectional inverter module. An AC terminal of each bidirectional AC/DC conversion module is electrically connected with a second transmission terminal of the corresponding medium frequency transformer. A DC terminal of each bidirectional AC/DC conversion module is electrically connected with the high voltage DC transmission grid.

### SUMMARY

The invention is defined by the features of the independent claims. Preferred embodiments are defined in the dependent claims.

The present disclosure provides control methods for an off-grid ESS, control devices and ESSs to at least solve the technical problems of current imbalance of each PCS and zero-sequence circulating current when a traditional ESS operates in AC/DC parallel off-grid mode.

In the first aspect, the present disclosure provides control methods for an off-grid ESS including at least two PCS. In an embodiment, the control method may include:
when the ESS is operating in an alternating current (AC)/direct current (DC) parallel off-grid mode, obtaining a first given value of positive sequence voltage amplitude of a present PCS to be controlled, a first given value of positive sequence phase of the present PCS, a first given value of D-axis negative sequence voltage of the present PCS and a first given value of Q-axis negative sequence voltage of the present PCS based on a first current sharing control loop, where the present PCS is any PCS in operation among the at least two PCSs (i.e., all the PCSs of the ESS), in the AC/DC parallel off-grid mode, the AC sides of all the PCSs of the ESS are connected in parallel and the DC sides of all the PCSs of the ESS are connected in parallel;
determining a first D-axis target control amount and a first Q-axis target control amount according to the first given value of positive sequence voltage amplitude, the first given value of positive sequence phase, the first given value of D-axis negative sequence voltage, the first given value of Q-axis negative sequence voltage, an outer voltage loop and an inner current loop;
determining a first zero-axis target control amount based on a zero-sequence current loop;
determining a first midpoint target control amount of a master PCS based on a DC bus midpoint control loop, where the master PCS is a PCS in operation among all the PCSs of the ESS, leaving other PCSs in operation of all the PCSs of the ESS are slave PCSs;
generating a first target waveform according to the first D-axis target control amount, the first Q-axis target control amount, the first zero-axis target control amount and the first midpoint target control amount; and
controlling the present PCS according to the first target waveform.

In an embodiment, determining the first zero-axis target control amount based on the zero-sequence current loop may include:
obtaining a sampling value of zero-sequence current of the present PCS;
calculating a difference between zero and the sampling value of zero-sequence current as a first difference;
inputting the first difference into a first preset controller to obtain a zero-sequence control amount; and
normalizing the zero-sequence control amount to obtain the first zero-axis target control amount.

In an embodiment, obtaining the first given value of positive sequence voltage amplitude of the present PCS, the first given value of positive sequence phase of the present PCS, the first given value of D-axis negative sequence voltage of the present PCS and a first given value of Q-axis negative sequence voltage of the present PCS based on the first current sharing control loop may include:
obtaining a positive sequence active current value of the present PCS, a positive sequence reactive current value of the present PCS, a negative sequence active current value of the present PCS and a negative sequence reactive current value of the present PCS;
obtaining a positive sequence active current average value of the ESS, a positive sequence reactive current average value of the ESS, a negative sequence active current average value of the ESS and a negative sequence reactive current average value of the ESS;
calculating a difference between the positive sequence active current value and the positive sequence active current average value as a second difference;
determining the first given value of positive sequence phase according to the second difference;
calculating a difference between the positive sequence reactive current value and the positive sequence reactive current average value as a third difference;
determining the first given value of positive sequence voltage amplitude according to the third difference;
calculating a difference between the negative sequence active current average value and the negative sequence active current value as a fourth difference;
determining the first given value of Q-axis negative sequence voltage according to the fourth difference;
calculating a difference between the negative sequence reactive current average value and the negative sequence reactive current value as a fifth difference; and
determining the first given value of D-axis negative sequence voltage according to the fifth difference.

In an embodiment, determining the first D-axis target control amount and the first Q-axis target control amount according to the first given value of positive sequence voltage amplitude, the first given value of positive sequence phase, the first given value of D-axis negative sequence voltage, the first given value of Q-axis negative sequence voltage, the outer voltage loop and the inner current loop may include:
generating a first given value of D-axis positive sequence voltage of the present PCS and a first given value of Q-axis positive sequence voltage of the present PCS according to the first given value of positive sequence voltage amplitude and the first given value of positive sequence phase;
determining a control amount of DC component of D-axis of the present PCS and a control amount of DC component of Q-axis of the present PCS according to a loop of DC component of voltage and a loop of DC component of current;
obtaining a sampling value of D-axis positive sequence voltage of the present PCS and a sampling value of Q-axis positive sequence voltage of the present PCS;
determining a first D-axis positive sequence current control amount according to the first given value of D-axis positive sequence voltage, the control amount of DC component of D-axis, the sampling value of D-axis positive sequence voltage and a D-axis voltage loop;
determining a first Q-axis positive sequence current control amount according to the first given value of Q-axis positive sequence voltage, the control amount of DC component of Q-axis, the sampling value of Q-axis positive sequence voltage and a Q-axis voltage loop;
determining a second D-axis positive sequence current control amount and a second Q-axis positive sequence current control amount according to the first given value of D-axis negative sequence voltage, the first given value of Q-axis negative sequence voltage and a negative sequence control loop;
obtaining three current sampling values corresponding to three phases of the present PCS;
determining a sampling value of D-axis positive sequence current, a sampling value of Q-axis positive sequence current, a third D-axis positive sequence current control amount and a third Q-axis positive sequence current control amount according to the three current sampling values corresponding to three phases of the present PCS;
determining the first D-axis target control amount according to the first D-axis positive sequence current control amount, the second D-axis positive sequence current control amount, the third D-axis positive sequence current control amount, the sampling value of D-axis positive sequence current, the sampling value of D-axis positive sequence voltage and a D-axis current loop; and
determining the first Q-axis target control amount according to the first Q-axis positive sequence current control amount, the second Q-axis positive sequence current control amount, the third Q-axis positive sequence current control amount, the sampling value of Q-axis positive sequence current, the sampling value of Q-axis positive sequence voltage and a Q-axis current loop.

In an embodiment, in the AC/DC parallel off-grid mode, the DC bus midpoints of the at least two PCSs of the ESS are connected to each other.

In an embodiment, when the ESS is operating in the AC/DC parallel off-grid mode, the control method may further include: performing a carrier synchronization control on the at least two PCSs of the ESS through a Controller Area Network.

In an embodiment, the control method may further include:
when the ESS is operating in a virtual synchronous generator (VSG) parallel off-grid mode, obtaining a second given value of positive sequence voltage amplitude of the present PCS, a second given value of positive sequence phase of the present PCS, a second given value of D-axis negative sequence voltage of the present PCS and a second given value of Q-axis negative sequence voltage of the present PCS based on a second current sharing control loop, where in the VSG parallel off-grid mode, the AC sides of all the PCSs of the ESS are connected in parallel and the DC sides of all the PCSs of the ESS are separate from each other;
determining a second D-axis target control amount and a second Q-axis target control amount according to the second given value of positive sequence voltage amplitude, the second given value of positive sequence phase, the second given value of D-axis negative sequence voltage, the second given value of Q-axis negative sequence voltage, the outer voltage loop and the inner current loop;
determining a second zero-axis target control amount based on the zero-sequence current loop;
determining a second midpoint target control amount of the present PCS based on the DC bus midpoint control loop;
generating a second target waveform according to the second D-axis target control amount, the second Q-axis target control amount, the second zero-axis target control amount and the second midpoint target control amount; and
controlling the present PCS according to the second target waveform.

In an embodiment, the control method may further include:
when the ESS is operating in a stand-alone off-grid mode, obtaining a third given value of positive sequence voltage amplitude of the present PCS, a third given value of positive sequence phase of the present PCS, a third given value of D-axis negative sequence voltage of the present PCS and a third given value of Q-axis negative sequence voltage of the present PCS, wherein in the stand-alone off-grid mode, the present PCS is an only PCS in operation among all the PCSs of the ESS;
determining a fourth D-axis positive sequence current control amount and a fourth Q-axis positive sequence current control amount based on a repetitive control loop;
determining a third D-axis target control amount and a third Q-axis target control amount according to the third given value of positive sequence voltage amplitude, the third given value of positive sequence phase, the third given value of D-axis negative sequence voltage, the third given value of Q-axis negative sequence voltage, the fourth D-axis positive sequence current control amount, the fourth Q-axis positive sequence current control amount, the outer voltage loop and the inner current loop;
determining a third midpoint target control amount of the present PCS based on the DC bus midpoint control loop, where, in this embodiment, the present PCS is the master PCS, that is, the master PCS and the present PCS is the same PCS in this embodiment;
generating a third target waveform according to the third D-axis target control amount, the third Q-axis target control amount and the third midpoint target control amount; and
controlling the present PCS according to the third target waveform.

In the second aspect, the present disclosure provides control devices for an off-grid ESS. The control device includes a memory and one or more processors. The memory is used to store a computer executable program which can be invoked and executed by the processors. When the computer executable program is executed by the processors, any one of the control methods provided in the above embodiments in the first aspect is performed.

In the third aspect, the present disclosure provides ESSs including at least two PCSs and a control device provide in the second aspect. The PCSs of the ESS are controlled by the control device.

The control device is used to, when the ESS is in an off-grid state, make the ESS operate in the AC/ DC parallel off-grid mode through controlling the AC sides of all the PCSs of the ESS to be connected in parallel and the DC sides of all the PCSs of the ESS to be connected in parallel; make the ESS operate in the VSG parallel off-grid mode through controlling the AC sides of all the PCSs of the ESS to be connected in parallel and the DC sides of all the PCSs of the ESS to be separate from each other; and make the ESS operate in the stand-alone off-grid mode through controlling that only one PCS of all the PCSs of the ESS is in operation (i.e., in an operating state).

In the fourth aspect, the present disclosure provides computer-readable storage media. The computer-readable storage media stores a computer program. When the computer program is executed, any one of the control methods provided in the above embodiments in the first aspect is performed.

Compared with the prior art, advantageous effects of the control method for an off-grid ESS provided in the present disclosure are: when the ESS is operating in the AC/DC parallel off-grid mode, the first given value of positive sequence voltage amplitude of the present PCS, the first given value of positive sequence phase of the present PCS, the first given value of D-axis negative sequence voltage of the present PCS and the first given value of Q-axis negative sequence voltage of the present PCS are obtained through the first current sharing control loop. The present PCS can be controlled based on the first given value of positive sequence voltage amplitude, the first given value of positive sequence phase, the first given value of D-axis negative sequence voltage and the first given value of Q-axis negative sequence voltage, and then the current sharing control is realized. In addition, the slave PCSs can follow the control amount of the master PCS through the DC bus midpoint control loop and the zero-sequence circulating current can be suppressed through adding the zero-sequence current loop.

### BRIEF DESCRIPTION OF THE DRAWINGS

In order to more clearly illustrate the technical solutions in the embodiments of the present disclosure, the drawings to be used in the descriptions of the embodiments or the prior art will be briefly described below. Obviously, the accompanying drawings in the following description are only some embodiments of the present disclosure, and for a person of ordinary skill in the art, without involving any inventive effort, other drawings may also be obtained according to these drawings.
Figure 1 is a schematic diagram of the structure of the ESS according to the embodiments of the present disclosure;
Figure 2 is a flow chart of the control method for an off-grid ESS according to the embodiments of the present disclosure;
Figure 3 is a schematic diagram of carrier synchronization according to the embodiments of the present disclosure;
Figure 4 is a schematic diagram of the structure of the control equipment for an off-grid ESS according to the embodiments of the present disclosure; and
Figure 5 is a schematic diagram of the control device according to the embodiments of the present disclosure.

### DETAILED DESCRIPTION OF ILLUSTRATIVE EMBODIMENTS

In the following description, for illustrative rather than limiting, specific details such as a particular system structure, technology and the like are proposed so that those skilled in the art can thoroughly understand the disclosed embodiments. However, those skilled in the art should be clear that the present disclosure may also be implemented in other embodiments without these specific details. In other cases, the detailed description of well-known systems, devices, circuits, and methods is omitted to avoid unnecessary details interfering with the description of the present disclosure.

In order to make the purpose of the present disclosure, technical solutions and advantageous effects clearer, the following will be described by specific embodiments in conjunction with the drawings.

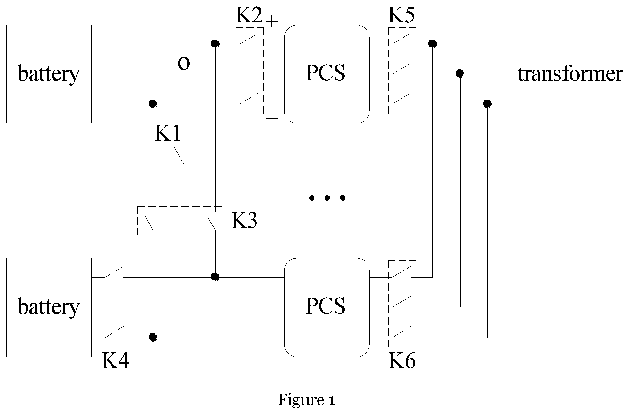

Referring to Figure 1 which shows a schematic diagram of the structure of an energy storage system (ESS) provided by an embodiment of the present disclosure, the ESS may include at least two power conversion systems (PCS). The direct current (DC) side of each PCS may be connected with a battery and the alternating current (AC) side of each PCS may be connected with the grid or one or more loads through a transformer. As shown in Figure 1, the ESS may include multiple switches (e.g., switch tubes or relays) K1, K2, K3, K4, K5 and K6 (For the PCSs omitted in Figure 1, there are also corresponding switches). Through controlling the switches, the ESS can operate in different modes.

In the off-grid situation, the ESS may operate in three modes including AC/DC parallel off-grid mode, virtual synchronous generator (VSG) parallel off-grid mode and stand-alone off-grid mode. In the AC/DC parallel off-grid mode, the AC sides of the PCSs of the ESS are connected in parallel and the DC sides of the PCSs of the ESS are connected in parallel. In the AC/DC parallel off-grid mode, communication needs to be introduced among the PCSs to realize functions such as phase synchronization, current sharing and suppression of zero-sequence circulating current among the PCSs, and the PCSs may be connected to each other by a communication bus. In the VSG parallel off-grid mode, the DC sides of the PCSs of the ESS are separate from each other and the AC sides of the PCSs of the ESS are connected in parallel. In the VSG parallel off-grid mode, communication among the PCSs is unnecessary and current sharing among the PCSs is realized through a VSG algorithm, and the communication bus is not required. In the stand-alone off-grid mode, the traditional control method of outer voltage loop + inner current loop may be adopted, and there is no need to consider the problems of parallel synchronization and current sharing.

Referring to Figure 1, when switches K1, K2, K3, K5 and K6 are closed and switch K4 is open, the ESS operates in the AC/DC parallel off-grid mode, in which the AC sides of the PCSs of the ESS are connected in parallel, the DC sides of the PCSs of the ESS are connected in parallel and the DC bus midpoints of the PCSs are connected together. When switches K2, K4, K5 and K6 are closed and switches K1 and K3 are open, the ESS operates in the VSG parallel off-grid mode, in which the AC sides of the PCSs of the ESS are connected in parallel, the DC sides of the PCSs of the ESS are separate from each other and each DC side is connected with a corresponding battery. When K2 and K5 are closed and K1, K3, K4 and K6 are open, or when K4 and K6 are closed and K1, K2, K3 and K5 are open, the ESS operates in the stand-alone off-grid mode, in which only one PCS of the PCSs of the ESS is in operation, and other PCSs are not connected to the system.

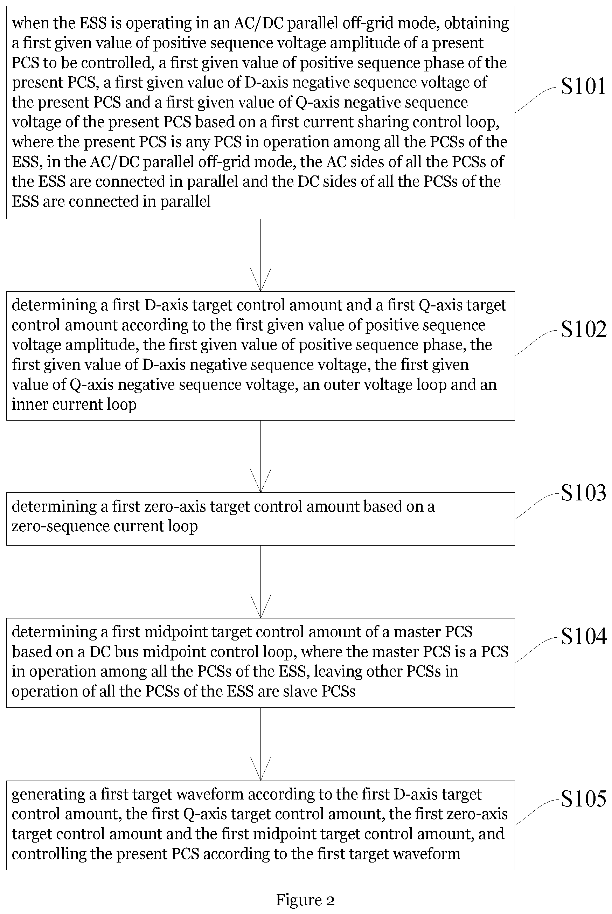

Figure 2 shows a flow chart of a control method for an off-grid ESS provided by an embodiment of the present disclosure. The control method may be executed by a control device. The ESS includes at least two PCSs. The control method is used to control each PCS of the ESS, that is, the control device can control each PCS of the ESS through the control method to achieve the purpose of current sharing and suppression of zero-sequence circulating current in the AC/DC parallel off-grid mode. The number of the PCS in the ESS may be set according to actual demand, and is not limited in the present disclosure.

As shown in Figure 2, the control method may include steps S101 to S105 which are described in detail below.

S101: when the ESS is operating in an AC/DC parallel off-grid mode, obtaining a first given value of positive sequence voltage amplitude of a present PCS to be controlled, a first given value of positive sequence phase of the present PCS, a first given value of D-axis negative sequence voltage of the present PCS and a first given value of Q-axis negative sequence voltage of the present PCS based on a first current sharing control loop, where the present PCS is any PCS in operation among the at least two PCSs (i.e., all the PCSs of the ESS), in the AC/DC parallel off-grid mode, the AC sides of all the PCSs of the ESS are connected in parallel and the DC sides of all the PCSs of the ESS are connected in parallel.

In this step, a PCS in operation means the PCS is connected in the ESS in the present operating mode, that is, the PCS is connected to a battery and a transformer.

When the ESS operates in the AC/DC parallel off-grid mode, in order to achieve the purpose of current sharing among all the PCSs of the ESS, the first given value of positive sequence voltage amplitude of the present PCS in the AC/DC parallel off-grid mode, the first given value of positive sequence phase of the present PCS in the AC/DC parallel off-grid mode, the first given value of D-axis negative sequence voltage of the present PCS in the AC/DC parallel off-grid mode and the first given value of Q-axis negative sequence voltage of the present PCS in the AC/DC parallel off-grid mode may be obtained through the first current sharing control loop. The purpose of current sharing may be achieved by performing outer voltage loop and inner current loop control based on the obtained first given value of positive sequence voltage amplitude, the obtained first given value of positive sequence phase, the obtained first given value of D-axis negative sequence voltage and the obtained first given value of Q-axis negative sequence voltage.

Each PCS in operation among the PCSs of the ESS can be controlled through the control method provided by the present disclosure and the PCS to be controlled can be called a present PCS. That is, each PCS in operation, as a present PCS, can be controlled through the control method.

S102: determining a first D-axis target control amount and a first Q-axis target control amount according to the first given value of positive sequence voltage amplitude, the first given value of positive sequence phase, the first given value of D-axis negative sequence voltage, the first given value of Q-axis negative sequence voltage, an outer voltage loop and an inner current loop.

In the present embodiment, the ESS is a three-phase system without zero line. A double-loop control method of outer voltage loop + inner current loop is adopted in DQ coordinate system. Through the outer voltage loop and inner current loop control, the first D-axis target control amount and the first Q-axis target control amount can be obtained.

S103: determining a first zero-axis target control amount based on a zero-sequence current loop.

The added zero-sequence current loop can be used to suppress the zero-sequence circulating current. The first zero-axis target control amount in the AC/DC parallel off-grid mode can be obtained through the zero-sequence current loop.

S104: determining a first midpoint target control amount of a master PCS based on a DC bus midpoint control loop, where the master PCS is a PCS in operation among all the PCSs of the ESS, leaving other PCSs in operation of all the PCSs of the ESS are slave PCSs.

When the ESS operates in the AC/DC parallel off-grid mode, one of the PCSs in operation is a master PCS and the others are slave PCSs. In the AC/DC parallel off-grid mode, in order to suppress the zero-sequence circulating current, the DC bus midpoint voltages of the slave PCSs need to be globally controlled by the master PCS, that is, the DC bus midpoint voltages of the master PCS and the slave PCSs are globally controlled through the first midpoint target control amount of the master PCS. It is noted that the master PCS may be the present PCS to be controlled or not, that is, the present PCS and the master PCS may be the same PCS or not.

The PCSs of the ESS may communicate with each other via Controller Area Network (CAN bus), and the master PCS may send the first midpoint target control amount to each slave PCS through the CAN bus.

In an embodiment, determining the first midpoint target control amount of the master PCS based on the DC bus midpoint control loop (mentioned in S104) may include the following steps:
obtaining a voltage difference between a positive DC bus of the master PCS and a negative DC bus of the master PCS;
calculating a difference between zero and the voltage difference to obtain a midpoint difference;
inputting the midpoint difference into a preset midpoint controller to obtain a value of the first midpoint target control amount;
obtaining a predetermined modulating voltage of the master PCS and an inductor current of the master PCS;
multiplying the predetermined modulating voltage by the inductor current to obtain a sign of a control amount as a sign of the first midpoint target control amount; and
obtaining the first midpoint target control amount according to the value of the first midpoint target control amount and the sign of the first midpoint target control amount.

In the present embodiment, the predetermined modulating voltage of the master PCS may be a modulating voltage determined according to a first D-axis target control amount of the master PCS, a first Q-axis target control amount of the master PCS and a first zero-axis target control amount of the master PCS.

S105: generating a first target waveform according to the first D-axis target control amount, the first Q-axis target control amount, the first zero-axis target control amount and the first midpoint target control amount, and controlling the present PCS according to the first target waveform.

The first D-axis target control amount, the first Q-axis target control amount and the first zero-axis target control amount are, in the AC/DC parallel off-grid mode, a D-axis control component, a Q-axis control component and a zero-axis control component, respectively, in DQ coordinate system. The first midpoint target control amount is, in the AC/DC parallel off-grid mode, a DC bus midpoint voltage control amount.

Through coordinate transformation, the first D-axis target control amount, the first Q-axis target control amount and the first zero-axis target control amount can be transformed to abc coordinate system to obtain three-phase control amounts. The first midpoint target control amount can, as a zero- sequence component, be superimposed on each three-phase control amount to obtain final three-phase control amounts. Then, a Space Vector Pulse Width Modulation (SVPWM) method may be adopted to obtain the first target waveform, according to which each PCS in operation can be controlled. Optionally, an Insulated Gate Bipolar Transistor (IGBT) of each PCS in operation may be controlled.

Compared with the prior art, advantageous effects of the control method including steps S101 to S105 are: when the ESS is operating in the AC/DC parallel off-grid mode, the first given value of positive sequence voltage amplitude of the present PCS, the first given value of positive sequence phase of the present PCS, the first given value of D-axis negative sequence voltage of the present PCS and the first given value of Q-axis negative sequence voltage of the present PCS are obtained through the first current sharing control loop. The present PCS can be controlled based on the first given value of positive sequence voltage amplitude, the first given value of positive sequence phase, the first given value of D-axis negative sequence voltage and the first given value of Q-axis negative sequence voltage, and then the current sharing control is realized. In addition, the slave PCSs can follow the control amount of the master PCS through the DC bus midpoint control loop and the zero-sequence circulating current can be suppressed through adding the zero-sequence current loop.

In an embodiment, S103 mentioned above may include the following steps:
obtaining a sampling value of zero-sequence current of the present PCS;
calculating a difference between zero and the sampling value of zero-sequence current as a first difference;
inputting the first difference into a first preset controller to obtain a zero-sequence control amount; and
normalizing the zero-sequence control amount to obtain the first zero-axis target control amount.

In normal situation, the zero-sequence current is zero. Therefore, in the present embodiment, zero is compared with the sampling value of zero-sequence current of the present PCS, that is, zero subtracts the sampling value of zero-sequence current to obtain the first difference. Then, the zero-sequence control amount can be obtained through performing preset controlling to the first difference and the first zero-axis target control amount can be obtained based on the zero-sequence control amount.

In the present embodiment, the relevant parameters in the first preset controller are pre-set. The type of the first preset controller can be selected according to actual demand. For example, the first preset controller may be proportional integral (PI) controller or proportional (P) controller. The normalization, that is, normalizing the zero-sequence control amount may be the zero-sequence control amount being divided by a given value of DC bus voltage of the PCS. The first zero-axis target control amount can be obtained through the normalization.

In an embodiment, S101 mentioned above may include the following steps:
obtaining a positive sequence active current value of the present PCS, a positive sequence reactive current value of the present PCS, a negative sequence active current value of the present PCS and a negative sequence reactive current value of the present PCS;
obtaining a positive sequence active current average value of the ESS, a positive sequence reactive current average value of the ESS, a negative sequence active current average value of the ESS and a negative sequence reactive current average value of the ESS;
calculating a difference between the positive sequence active current value and the positive sequence active current average value as a second difference;
determining the first given value of positive sequence phase according to the second difference;
calculating a difference between the positive sequence reactive current value and the positive sequence reactive current average value as a third difference;
determining the first given value of positive sequence voltage amplitude according to the third difference;
calculating a difference between the negative sequence active current average value and the negative sequence active current value as a fourth difference;
determining the first given value of Q-axis negative sequence voltage according to the fourth difference;
calculating a difference between the negative sequence reactive current average value and the negative sequence reactive current value as a fifth difference; and
determining the first given value of D-axis negative sequence voltage according to the fifth difference.

In the present embodiment, in the AC/DC parallel off-grid mode, in order to achieve better current sharing among the PCSs of the ESS, each PCS may broadcast its own positive sequence active current value, positive sequence reactive current value, negative sequence active current value and negative sequence reactive current value of the inverter current in DQ coordinate system through a CAN bus. Each PCS may collect the current information of the other PCSs and calculate the current average values according to the number of the PCSs to obtain the positive sequence active current average value, the positive sequence reactive current average value, the negative sequence active current average value and the negative sequence reactive current average value of the ESS.

In the present embodiment, the difference between the current value of the present PCS and the current average value of the ESS are calculated. The difference can be input into a preset controller and the output of the preset controller can be superimposed on the given values and phases of the AC voltage loop to achieve the current sharing among the PCSs.

In the present embodiment, the positive sequence active current value, positive sequence reactive current value, negative sequence active current value and negative sequence reactive current value are all actual sampling values.

What mentioned above: calculating the difference between the positive sequence active current value and the positive sequence active current average value as the second difference, and determining the first given value of positive sequence phase according to the second difference may include the following steps:
taking the positive sequence active current average value from the positive sequence active current value to obtain the second difference;
inputting the second difference into a second preset controller to obtain a phase difference; and
obtaining the first given value of positive sequence phase according to the phase difference.

Obtaining the first given value of positive sequence phase according to the phase difference may include: taking the phase difference from a preset phase value to obtain the first given value of positive sequence phase, where the preset phase value may be a given value of phase which can be set according to actual demand and is not limited in the present disclosure.

What mentioned above: calculating the difference between the positive sequence reactive current value and the positive sequence reactive current average value as the third difference, and determining the first given value of positive sequence voltage amplitude according to the third difference may include the following steps:
taking the positive sequence reactive current average value from the positive sequence reactive current value to obtain the third difference;
inputting the third difference into a third preset controller to obtain a voltage difference; and
obtaining the first given value of positive sequence voltage amplitude according to the voltage difference.

Obtaining the first given value of positive sequence voltage amplitude according to the voltage difference may include: taking the voltage difference from a preset voltage amplitude value to obtain the first given value of positive sequence voltage amplitude, where the preset voltage amplitude value may be a given value of voltage amplitude which can be set according to actual demand and is not limited.

What mentioned above: calculating the difference between the negative sequence active current average value and the negative sequence active current value as the fourth difference, and determining the first given value of Q-axis negative sequence voltage according to the fourth difference may include the following steps:
taking the negative sequence active current value from the negative sequence active current average value to obtain the fourth difference; and
inputting the fourth difference into a fourth preset controller to obtain the first given value of Q-axis negative sequence voltage.

What mentioned above: calculating the difference between the negative sequence reactive current average value and the negative sequence reactive current value as the fifth difference, and determining the first given value of D-axis negative sequence voltage according to the fifth difference may include the following steps:
taking the negative sequence reactive current value from the negative sequence reactive current average value to obtain the fifth difference; and
inputting the fifth difference into a fifth preset controller to obtain the first given value of D-axis negative sequence voltage.

The relevant parameters in each of the second preset controller, the third preset controller, the fourth preset controller and the fifth preset controller mentioned above are pre-set. The type of each preset controller can be selected according to actual demand. For example, each preset controller may be proportional integral (PI) controller or proportional (P) controller.

In an embodiment, S102 mentioned above may include the following steps:
generating a first given value of D-axis positive sequence voltage of the present PCS and a first given value of Q-axis positive sequence voltage of the present PCS according to the first given value of positive sequence voltage amplitude and the first given value of positive sequence phase;
determining a control amount of DC component of D-axis of the present PCS and a control amount of DC component of Q-axis of the present PCS according to a loop of DC component of voltage and a loop of DC component of current;
obtaining a sampling value of D-axis positive sequence voltage of the present PCS and a sampling value of Q-axis positive sequence voltage of the present PCS;
determining a first D-axis positive sequence current control amount according to the first given value of D-axis positive sequence voltage, the control amount of DC component of D-axis, the sampling value of D-axis positive sequence voltage and a D-axis voltage loop;
determining a first Q-axis positive sequence current control amount according to the first given value of Q-axis positive sequence voltage, the control amount of DC component of Q-axis, the sampling value of Q-axis positive sequence voltage and a Q-axis voltage loop;
determining a second D-axis positive sequence current control amount and a second Q-axis positive sequence current control amount according to the first given value of D-axis negative sequence voltage, the first given value of Q-axis negative sequence voltage and a negative sequence control loop;
obtaining three current sampling values corresponding to three phases of the present PCS;
determining a sampling value of D-axis positive sequence current, a sampling value of Q-axis positive sequence current, a third D-axis positive sequence current control amount and a third Q-axis positive sequence current control amount according to the three current sampling values corresponding to three phases of the present PCS;
determining the first D-axis target control amount according to the first D-axis positive sequence current control amount, the second D-axis positive sequence current control amount, the third D-axis positive sequence current control amount, the sampling value of D-axis positive sequence current, the sampling value of D-axis positive sequence voltage and a D-axis current loop; and
determining the first Q-axis target control amount according to the first Q-axis positive sequence current control amount, the second Q-axis positive sequence current control amount, the third Q-axis positive sequence current control amount, the sampling value of Q-axis positive sequence current, the sampling value of Q-axis positive sequence voltage and a Q-axis current loop.

In the present embodiment, the outer voltage loop may include the D-axis voltage loop and the Q-axis voltage loop, and the inner current loop may include the D-axis current loop and the Q-axis current loop.

What mentioned above: generating the first given value of D-axis positive sequence voltage of the present PCS and the first given value of Q-axis positive sequence voltage of the present PCS according to the first given value of positive sequence voltage amplitude and the first given value of positive sequence phase may include the following steps:
generating a first given value of positive sequence voltage according to the first given value of positive sequence voltage amplitude and the first given value of positive sequence phase; and
performing DQ coordinate transformation on the first given value of positive sequence voltage to obtain the first given value of D-axis positive sequence voltage of the present PCS and the first given value of Q-axis positive sequence voltage of the present PCS.

What mentioned above: determining the control amount of DC component of D-axis of the present PCS and the control amount of DC component of Q-axis of the present PCS according to the loop of DC component of voltage and the loop of DC component of current may include the following steps:
obtaining a given value of DC voltage of the present PCS, a sampling value of DC voltage of the present PCS, a given value of DC current of the present PCS and a sampling value of DC current of the present PCS; and
determining the control amount of DC component of D-axis and the control amount of DC component of Q-axis according to the given value of DC voltage, the sampling value of DC voltage, the loop of DC component of voltage, the given value of DC current, the sampling value of DC current and the loop of DC component of current.

What mentioned above: determining the control amount of DC component of D-axis and the control amount of DC component of Q-axis according to the given value of DC voltage, the sampling value of DC voltage, the loop of DC component of voltage, the given value of DC current, the sampling value of DC current and the loop of DC component of current may include the following steps:
calculating a difference between the given value of DC voltage and the sampling value of DC voltage as a sixth difference;
inputting the sixth difference into a sixth preset controller to obtain an output of the loop of DC component of voltage;
calculating a difference between the given value of DC current and the sampling value of DC current as a seventh difference;
inputting the seventh difference into a seventh preset controller to obtain an output of the loop of DC component of current; and
performing DQ coordinate transformation on the output of the loop of DC component of voltage and the output of the loop of DC component of current to obtain the control amount of DC component of D-axis and the control amount of DC component of Q-axis.

In the present embodiment, the relevant parameters in either of the sixth preset controller or the seventh preset controller are pre-set. The type of both preset controllers can be selected according to actual demand. For example, either of the sixth preset controller or the seventh preset controller may be proportional integral (PI) controller or proportional (P) controller.

What mentioned above: obtaining the sampling value of D-axis positive sequence voltage of the present PCS and the sampling value of Q-axis positive sequence voltage of the present PCS may include the following steps:
obtaining three sampling values of positive sequence voltage corresponding to three phases of an inverter voltage of the present PCS; and
performing DQ coordinate transformation on the three sampling values of positive sequence voltage to obtain the sampling value of D-axis positive sequence voltage and the sampling value of Q-axis positive sequence voltage.

What mentioned above: determining the first D-axis positive sequence current control amount according to the first given value of D-axis positive sequence voltage, the control amount of DC component of D-axis, the sampling value of D-axis positive sequence voltage and the D-axis voltage loop may include the following steps:
adding the first given value of D-axis positive sequence voltage to the control amount of DC component of D-axis to obtain a first result;
taking the sampling value of D-axis positive sequence voltage from the first result to obtain an eighth difference; and
inputting the eighth difference to an eighth preset controller to obtain the first D-axis positive sequence current control amount.

What mentioned above: determining the first Q-axis positive sequence current control amount according to the first given value of Q-axis positive sequence voltage, the control amount of DC component of Q-axis, the sampling value of Q-axis positive sequence voltage and the Q-axis voltage loop may include the following steps:
adding the first given value of Q-axis positive sequence voltage to the control amount of DC component of Q-axis to obtain a second result;
taking the sampling value of Q-axis positive sequence voltage from the second result to obtain a ninth difference; and
inputting the ninth difference to a ninth preset controller to obtain the first Q-axis positive sequence current control amount.

The relevant parameters in either of the eighth preset controller or the ninth preset controller mentioned above are pre-set. The type of both preset controllers can be selected according to actual demand. For example, either of the eighth preset controller or the ninth preset controller may be proportional integral (PI) controller or proportional (P) controller.

What mentioned above: determining the second D-axis positive sequence current control amount and the second Q-axis positive sequence current control amount according to the first given value of D-axis negative sequence voltage, the first given value of Q-axis negative sequence voltage and the negative sequence control loop may include the following steps:
obtaining a sampling value of D-axis negative sequence voltage of the present PCS and a sampling value of Q-axis negative sequence voltage of the present PCS;
taking the sampling value of D-axis negative sequence voltage from the first given value of D-axis negative sequence voltage to obtain a tenth difference;
inputting the tenth difference into a tenth preset controller to obtain a first output of the negative sequence control loop;
taking the sampling value of Q-axis negative sequence voltage from the first given value of Q-axis negative sequence voltage to obtain an eleventh difference; and
inputting the eleventh difference into an eleventh preset controller to obtain a second output of the negative sequence control loop.

The relevant parameters in either of the tenth preset controller or the eleventh preset controller mentioned above are pre-set. The type of both preset controllers can be selected according to actual demand. For example, either of the tenth preset controller or the eleventh preset controller may be proportional integral (PI) controller or proportional (P) controller.

Three current sampling values corresponding to three phases of the present PCS are sampling values of inverter current of the present PCS.

What mentioned above: determining the sampling value of D-axis positive sequence current, the sampling value of Q-axis positive sequence current, the third D-axis positive sequence current control amount and the third Q-axis positive sequence current control amount according to the three current sampling values corresponding to three phases of the present PCS may include the following steps:
performing DQ coordinate transformation on the three current sampling values corresponding to three phases of the present PCS to obtain the sampling value of D-axis positive sequence current and the sampling value of Q-axis positive sequence current;
multiplying the sampling value of D-axis positive sequence current by a first preset coefficient to obtain the third D-axis positive sequence current control amount; and
multiplying the sampling value of Q-axis positive sequence current by a second preset coefficient to obtain the third Q-axis positive sequence current control amount.

Both the first preset coefficient and the second preset coefficient mentioned above can be set according to actual demand and are not limited.

What mentioned above: determining the first D-axis target control amount according to the first D-axis positive sequence current control amount, the second D-axis positive sequence current control amount, the third D-axis positive sequence current control amount, the sampling value of D-axis positive sequence current, the sampling value of D-axis positive sequence voltage and the D-axis current loop may include the following steps:
adding the first D-axis positive sequence current control amount and the second D-axis positive sequence current control amount to the third D-axis positive sequence current control amount to obtain a third result;
taking the sampling value of D-axis positive sequence current from the third result to obtain a twelfth difference;
inputting the twelfth difference into a twelfth preset controller to obtain an output of the D-axis current loop;
adding the output of the D-axis current loop to the sampling value of D-axis positive sequence voltage to obtain a fourth result; and
normalizing the fourth result to obtain the first D-axis target control amount.

What mentioned above: determining the first Q-axis target control amount according to the first Q-axis positive sequence current control amount, the second Q-axis positive sequence current control amount, the third Q-axis positive sequence current control amount, the sampling value of Q-axis positive sequence current, the sampling value of Q-axis positive sequence voltage and the Q-axis current loop may include the following steps:
adding the first Q-axis positive sequence current control amount and the second Q-axis positive sequence current control amount to the third Q-axis positive sequence current control amount to obtain a fifth result;
taking the sampling value of Q-axis positive sequence current from the fifth result to obtain a thirteenth difference;
inputting the thirteenth difference into a thirteenth preset controller to obtain an output of the Q-axis current loop;
adding the output of the Q-axis current loop to the sampling value of Q-axis positive sequence voltage to obtain a sixth result; and
normalizing the sixth result to obtain the first Q-axis target control amount.

The relevant parameters in either of the twelfth preset controller or the thirteenth preset controller mentioned above are pre-set. The type of both preset controllers can be selected according to actual demand. For example, either of the twelfth preset controller or the thirteenth preset controller may be proportional integral (PI) controller or proportional (P) controller.

In an embodiment, in the AC/DC parallel off-grid mode, DC bus midpoints of the at least two PCSs are connected to each other.

In the AC/DC parallel off-grid mode, the DC bus midpoints of the at least two PCSs are connected to each other and the control amounts of DC bus midpoint voltage of the slave PCSs follow the control amount of DC bus midpoint voltage of the master PCS, thus the zero-sequence circulating current is suppressed.

In an embodiment, when the ESS is operating in the AC/DC parallel off-grid mode, the control method provided by the present disclosure may further include the following step: performing a carrier synchronization control on the at least two PCSs through a CAN.

In the present embodiment, a CAN bus for carrier synchronization is added among the PCSs. Through the CAN bus, the carrier synchronization among the PCSs can be achieved.

In the AC/DC parallel off-grid mode, because of the wiring method that both the AC sides and the DC sides of the PCSs are connected in parallel, in order to suppress the zero-sequence circulating current and non-zero-sequence high-frequency circulating current among the PCSs, the carrier synchronization among the PCSs may be performed.

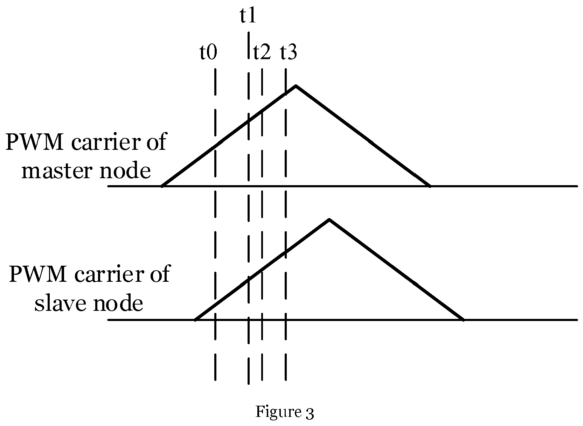

The basic idea of carrier synchronization is that a master node (e.g., the master PCS of the ESS) broadcasts its own carrier signal on a bus, meanwhile multiple slave nodes (e.g., the slave PCSs of the ESS) which are connected on the same bus with the master node receive the carrier signal broadcast by the master node, and, using this carrier signal as a reference, the multiple slave nodes adjust their own carrier signals to be consistent with the carrier signal of the master node. As shown in Figure 3, within a cycle of the carrier synchronization, steps corresponding to four moments t0-t3 which are described below may be performed.

At moment to: the master node sends a timing signal (e.g., clock synchronization signal) which may be any data.

At moment t1: the timing signal is sent successfully, and because the sending delay of CAN communication data is short, the moment when the master node sends the timing signal successfully can be considered as the same moment when the slave nodes receive the timing signal successfully. For a Digital Signal Processor (DSP) with postmark function, such as a DSP of the same series as F28335 which integrates eCAN module having the postmark function, the CAN communication module can automatically record the moment of receiving and sending successfully and record the value of the CAN time base counter corresponding to this moment to the MOTSx register.

For a DSP without postmark function, such as F28374S which integrates DCAN having not the postmark function, the recording of the moments of receiving and sending successfully of the CAN communication needs to be done by software. In this case, the receiving and sending interrupt of CAN communication can be used to record the moments of receiving and sending successfully, and in order to ensure recording without delay, interrupt nesting is required and the priority of CAN interrupt should be the highest.

In order to realize the interrupt nesting, the operations of the flags need to be understood after entering an interrupt. At the beginning of entering the interrupt, the interrupt enable register (IER) and the interrupt global mask bit (INTM) are automatically saved in the stack firstly. Then, the IER and the interrupt flag register (IFR) are automatically cleared, and the INTM is set to 1 to mask the interrupt. After leaving the interrupt, the IER and INTM are automatically recovered from the stack.

Therefore, in order to realize the interrupt nesting, two important steps need to be done in the interrupt service is to reopen the IER and clear the INTM.

There are three interrupts in the program of an inverter of a PCS: ADC interrupt, CPUTIMERo interrupt and DCAN interrupt. In order to ensure that DCAN has the highest priority, the other two interrupts must be nested open, and DCAN interrupt is not nested open. The interrupt of DCAN is INT 9.5.

Since the ninth set of interrupts in the actual application only opens the interrupt source INTo9.5, the operation of PieCtrlRegs.PIEIER9.all can be dispensed with.

The CAN receiving and sending functions of the interrupt service need to record the moment of receiving and sending successfully.

At moment t2:
The master node calculates the difference between the value of the CAN time base counter (CANTSC) at current moment and the value of the counter for recording the moment of the master node sending successfully recorded at moment t1. The time interval △t can be calculated between the moment t1 and t2 through this difference. Then, the value PWM_Count_Mt1 of the PWM time base counter at moment t1 can be reversed through the current value of the PWM time base counter (TBCTR) and the value of △t. The value PWM_Count_Mt1 is sent to the slave nodes;
The slave nodes operate in a similar way to the master node and calculate the value PWM_Count_St1 of the PWM time base counter of the slave nodes at moment t1.

At moment t3: the slave nodes receive the PWM_Count_Mt1 sent by the master node. The slave nodes calculate the difference between PWM_Count_St1 and PWM_Count_Mt1, and obtain the adjustment amount (+1 or -1) of the PWM cycle register (TBPRD) of the slave nodes according to the sign this difference.

The steps at the moments to to t3 are repeated until the carrier of the slave nodes is synchronized with that of the master node.

In an embodiment, in the AC/DC parallel off-grid mode, the at least two PCSs of the ESS communicate with each other through a CAN bus for current sharing and each PCS broadcasts its own current sharing information (positive sequence current, negative sequence current and the like) through the CAN bus.

In the AC/DC parallel off-grid mode, each PCS may share its own information through a CAN bus for information sharing to share other information except for the current sharing information.

In an embodiment, the control method provided by the present disclosure may further include the following steps:
when the ESS is operating in a virtual synchronous generator (VSG) parallel off-grid mode, obtaining a second given value of positive sequence voltage amplitude of the present PCS, a second given value of positive sequence phase of the present PCS, a second given value of D-axis negative sequence voltage of the present PCS and a second given value of Q-axis negative sequence voltage of the present PCS based on a second current sharing control loop, where in the VSG parallel off-grid mode, the AC sides of all the PCSs of the ESS are connected in parallel and the DC sides of all the PCSs of the ESS are separate from each other;
determining a second D-axis target control amount and a second Q-axis target control amount according to the second given value of positive sequence voltage amplitude, the second given value of positive sequence phase, the second given value of D-axis negative sequence voltage, the second given value of Q-axis negative sequence voltage, the outer voltage loop and the inner current loop;
determining a second zero-axis target control amount based on the zero-sequence current loop;
determining a second midpoint target control amount of the present PCS based on the DC bus midpoint control loop;
generating a second target waveform according to the second D-axis target control amount, the second Q-axis target control amount, the second zero-axis target control amount and the second midpoint target control amount; and
controlling the present PCS according to the second target waveform.

In the VSG parallel off-grid mode, a traditional droop control may be adopted. Assuming that the connection impedance between modules is inductive, there is a droop control relationship of P-f (active power-frequency) and Q-U (reactive power-voltage).

In the VSG parallel off-grid mode, both the second given value of D-axis negative sequence voltage and the second given value of Q-axis negative sequence voltage are zero.

What mentioned above: obtaining the second given value of positive sequence voltage amplitude of the present PCS and the second given value of positive sequence phase of the present PCS based on the second current sharing control loop may include the following steps:
obtaining a given value of active power of the present PCS and a sampling value of active power of the present PCS;
taking the sampling value of active power from the given value of active power to obtain a fourteenth difference;
multiplying the fourteenth difference by a first droop coefficient m to obtain an angular frequency difference;
adding a preset angular frequency to the angular frequency difference to obtain a given value of angular frequency;
performing transformation on the given value of angular frequency to obtain the second given value of positive sequence phase;
obtaining a given value of reactive power of the present PCS and a sampling value of reactive power of the present PCS;
taking the sampling value of reactive power from the given value of reactive power to obtain a fifteenth difference;
multiplying the fifteenth difference by a second droop coefficient n to obtain a voltage amplitude difference; and
adding a preset voltage amplitude to the voltage amplitude difference to obtain the second given value of positive sequence voltage amplitude.

The preset angular frequency can be pre-set according to actual demand and is not limited in the present disclosure.

The control method in the VSG parallel off-grid mode is similar to the control method in the AC/DC parallel off-grid mode, except that different current sharing control loops are used to output different given values of positive sequence voltage amplitude, given values of positive sequence phase, given values of D-axis negative sequence voltage and given values of Q-axis negative sequence voltage. And in the VSG parallel off-grid mode, the DC bus midpoint control loop may determine the second midpoint target control amount of the present PCS according to the relevant parameters of the present PCS, without the need to follow the control amount of the master PCS. Other aspects in the VSG parallel off-grid mode can refer to the description of the control method in the AC/DC parallel off-grid mode and will not be repeated.

In an embodiment, the control method provided by the present disclosure may further include the following steps:
when the ESS is operating in a stand-alone off-grid mode, obtaining a third given value of positive sequence voltage amplitude of the present PCS, a third given value of positive sequence phase of the present PCS, a third given value of D-axis negative sequence voltage of the present PCS and a third given value of Q-axis negative sequence voltage of the present PCS, where in the stand-alone off-grid mode, the present PCS is an only PCS in operation among all the PCSs of the ESS;
determining a fourth D-axis positive sequence current control amount and a fourth Q-axis positive sequence current control amount based on a repetitive control loop;
determining a third D-axis target control amount and a third Q-axis target control amount according to the third given value of positive sequence voltage amplitude, the third given value of positive sequence phase, the third given value of D-axis negative sequence voltage, the third given value of Q-axis negative sequence voltage, the fourth D-axis positive sequence current control amount, the fourth Q-axis positive sequence current control amount, the outer voltage loop and the inner current loop;
determining a third midpoint target control amount of the present PCS based on the DC bus midpoint control loop, where in the present embodiment, the present PCS is the master PCS, that is the master PCS and the present PCS is the same PCS in the present embodiment;
generating a third target waveform according to the third D-axis target control amount, the third Q-axis target control amount and the third midpoint target control amount; and
controlling the present PCS according to the third target waveform.

In the stand-alone off-grid mode, both the third given value of D-axis negative sequence voltage and the third given value of Q-axis negative sequence voltage are zero. The third given value of positive sequence voltage amplitude may be the preset voltage amplitude mentioned above. The preset voltage amplitude may be the second given value of positive sequence voltage amplitude in the VSG parallel off-grid mode when the second droop coefficient n in the second current sharing control loop is zero. The third given value of positive sequence phase may be the preset phase value mentioned above. The preset phase value may be the second given value of positive sequence phase in the VSG parallel off-grid mode when the first droop coefficient m in the second current sharing control loop is zero.

Compared with the AC/DC parallel off-grid mode, in the stand-alone off-grid mode, the repetitive control loop is added and the zero-sequence current loop is reduced. Other aspects in the stand-alone off-grid mode can refer to the description of the control method in the AC/DC parallel off-grid mode and will not be repeated.

What mentioned above: determining the fourth D-axis positive sequence current control amount and the fourth Q-axis positive sequence current control amount based on the repetitive control loop may include the following steps:
in the stand-alone off-grid mode, obtaining a given value of D-axis voltage of the present PCS, a sampling value of D-axis voltage of the present PCS, a given value of Q-axis voltage of the present PCS and a sampling value of Q-axis voltage of the present PCS;
taking the sampling value of D-axis voltage from the given value of D-axis voltage to obtain a sixteenth difference;
inputting the sixteenth difference into a first preset repetitive controller to obtain the fourth D-axis positive sequence current control amount;
taking the sampling value of Q-axis voltage from the given value of Q-axis voltage to obtain a seventeenth difference; and
inputting the seventeenth difference into a second preset repetitive controller to obtain the fourth Q-axis positive sequence current control amount.

The relevant parameters in either of the first preset repetitive controller or the second preset repetitive controller mentioned above are pre-set.

Compared with the AC/DC parallel off-grid mode, in the stand-alone off-grid mode, for the control of the D-axis current loop, only a control amount sum together process is added in the first summation step, that is, the fourth D-axis positive sequence current control amount, and other steps remain unchanged. Similarly, for the D-axis current loop, only a control amount sum together process is added in the first summation step, that is, the fourth Q-axis positive sequence current control amount, and other steps remain unchanged.

It should be understood that the size of the serial numbers of the steps appearing in the above embodiments do not imply the execution order. The execution order of each step shall be determined by its function and internal logic, and its serial number shall not constitute any qualification for the embodiment of the present disclosure.

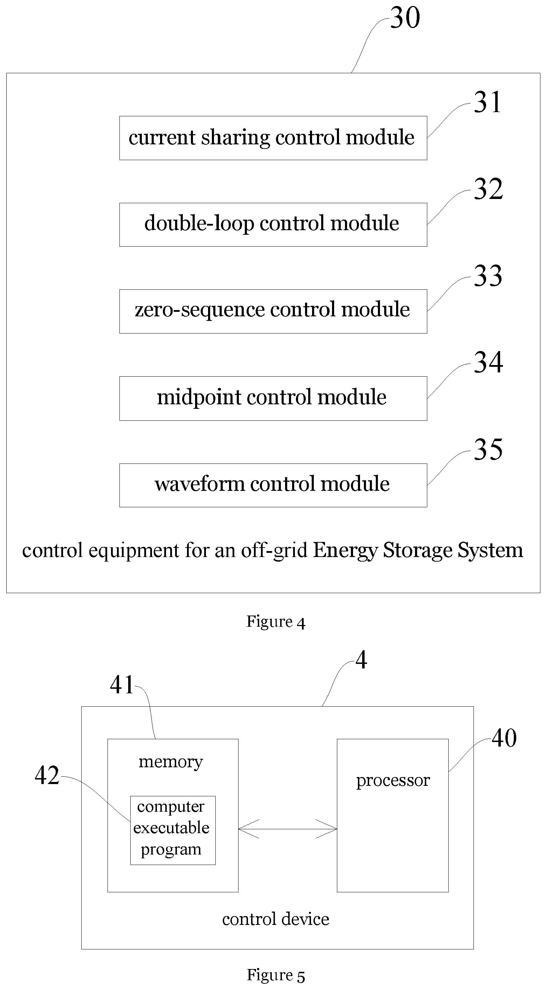

Figure 4 is a schematic diagram of the structure of the control equipment for an off-grid ESS including at least two PCSs, which, for illustrative purposes, only shows the portions related to embodiments of the present disclosure. The control equipment shown in Figure 4 is described in detail below.

Control equipment 30 for an off-grid ESS shown in Figure 4 includes a current sharing control module 31, a double-loop control module 32, a zero-sequence control module 33, a midpoint control module 34 and a waveform control module 35.

Current sharing control module 31 is used to, when the ESS is operating in an AC/ DC parallel off-grid mode, obtain a first given value of positive sequence voltage amplitude of a present PCS to be controlled, a first given value of positive sequence phase of the present PCS, a first given value of D-axis negative sequence voltage of the present PCS and a first given value of Q-axis negative sequence voltage of the present PCS based on a first current sharing control loop, where the present PCS is any PCS in operation among the at least two PCSs (i.e., all the PCSs of the ESS), in the AC/DC parallel off-grid mode, the AC sides of all the PCSs of the ESS are connected in parallel and the DC sides of all the PCSs of the ESS are connected in parallel.

Double-loop control module 32 is used to determine a first D-axis target control amount and a first Q-axis target control amount according to the first given value of positive sequence voltage amplitude, the first given value of positive sequence phase, the first given value of D-axis negative sequence voltage, the first given value of Q-axis negative sequence voltage, an outer voltage loop and an inner current loop.

Zero-sequence control module 33 is used to determine a first zero-axis target control amount based on a zero-sequence current loop.

Midpoint control module 34 is used to determine a first midpoint target control amount of a master PCS based on a DC bus midpoint control loop, where the master PCS is a PCS in operation among all the PCSs of the ESS, leaving other PCSs in operation of all the PCSs of the ESS are slave PCSs.

Waveform control module 35 is used to generate a first target waveform according to the first D-axis target control amount, the first Q-axis target control amount, the first zero-axis target control amount and the first midpoint target control amount, and control the present PCS according to the first target waveform.

In an embodiment, zero-sequence control module 33 is further used to:
obtain a sampling value of zero-sequence current of the present PCS;
calculate a difference between zero and the sampling value of zero-sequence current as a first difference;
input the first difference into a first preset controller to obtain a zero-sequence control amount; and
normalize the zero-sequence control amount to obtain the first zero-axis target control amount.

In an embodiment, current sharing control module 31 is further used to:
obtain a positive sequence active current value of the present PCS, a positive sequence reactive current value of the present PCS, a negative sequence active current value of the present PCS and a negative sequence reactive current value of the present PCS;
obtain a positive sequence active current average value of the ESS, a positive sequence reactive current average value of the ESS, a negative sequence active current average value of the ESS and a negative sequence reactive current average value of the ESS;
calculate a difference between the positive sequence active current value and the positive sequence active current average value as a second difference;
determine the first given value of positive sequence phase according to the second difference;
calculate a difference between the positive sequence reactive current value and the positive sequence reactive current average value as a third difference;
determine the first given value of positive sequence voltage amplitude according to the third difference;
calculate a difference between the negative sequence active current average value and the negative sequence active current value as a fourth difference;
determine the first given value of Q-axis negative sequence voltage according to the fourth difference;
calculate a difference between the negative sequence reactive current average value and the negative sequence reactive current value as a fifth difference; and
determine the first given value of D-axis negative sequence voltage according to the fifth difference.

In an embodiment, double-loop control module 32 is further used to:
generate a first given value of D-axis positive sequence voltage of the present PCS and a first given value of Q-axis positive sequence voltage of the present PCS according to the first given value of positive sequence voltage amplitude and the first given value of positive sequence phase;
determine a control amount of DC component of D-axis of the present PCS and a control amount of DC component of Q-axis of the present PCS according to a loop of DC component of voltage and a loop of DC component of current;
obtain a sampling value of D-axis positive sequence voltage of the present PCS and a sampling value of Q-axis positive sequence voltage of the present PCS;
determine a first D-axis positive sequence current control amount according to the first given value of D-axis positive sequence voltage, the control amount of DC component of D-axis, the sampling value of D-axis positive sequence voltage and a D-axis voltage loop;
determine a first Q-axis positive sequence current control amount according to the first given value of Q-axis positive sequence voltage, the control amount of DC component of Q-axis, the sampling value of Q-axis positive sequence voltage and a Q-axis voltage loop;
determine a second D-axis positive sequence current control amount and a second Q-axis positive sequence current control amount according to the first given value of D-axis negative sequence voltage, the first given value of Q-axis negative sequence voltage and a negative sequence control loop;
obtain three current sampling values corresponding to three phases of the present PCS;
determine a sampling value of D-axis positive sequence current, a sampling value of Q-axis positive sequence current, a third D-axis positive sequence current control amount and a third Q-axis positive sequence current control amount according to the three current sampling values corresponding to three phases of the present PCS;
determine the first D-axis target control amount according to the first D-axis positive sequence current control amount, the second D-axis positive sequence current control amount, the third D-axis positive sequence current control amount, the sampling value of D-axis positive sequence current, the sampling value of D-axis positive sequence voltage and a D-axis current loop; and
determine the first Q-axis target control amount according to the first Q-axis positive sequence current control amount, the second Q-axis positive sequence current control amount, the third Q-axis positive sequence current control amount, the sampling value of Q-axis positive sequence current, the sampling value of Q-axis positive sequence voltage and a Q-axis current loop.

In an embodiment, in the AC/DC parallel off-grid mode, the DC bus midpoints of the at least two PCSs are connected to each other.

In an embodiment, control equipment 30 for an off-grid ESS further includes a carrier synchronization module.

The carrier synchronization module is used to, when the ESS is operating in the AC/DC parallel off-grid mode, perform a carrier synchronization control on the at least two PCSs through a Controller Area Network.

In an embodiment, control equipment 30 further includes a VSG parallel off-grid control module.

The VSG parallel off-grid control module is used to:
when the ESS is operating in a VSG parallel off-grid mode, obtain a second given value of positive sequence voltage amplitude of the present PCS, a second given value of positive sequence phase of the present PCS, a second given value of D-axis negative sequence voltage of the present PCS and a second given value of Q-axis negative sequence voltage of the present PCS based on a second current sharing control loop, where in the VSG parallel off-grid mode, the AC sides of the at least two PCSs (i.e., all the PCSs of the ESS) are connected in parallel and the DC sides of all the PCSs of the ESS are separate from each other;
determine a second D-axis target control amount and a second Q-axis target control amount according to the second given value of positive sequence voltage amplitude, the second given value of positive sequence phase, the second given value of D-axis negative sequence voltage, the second given value of Q-axis negative sequence voltage, the outer voltage loop and the inner current loop;
determine a second zero-axis target control amount based on the zero-sequence current loop;
determine a second midpoint target control amount of the present PCS based on the DC bus midpoint control loop;
generate a second target waveform according to the second D-axis target control amount, the second Q-axis target control amount, the second zero-axis target control amount and the second midpoint target control amount; and
control the present PCS according to the second target waveform.

In an embodiment, control equipment 30 further includes a stand-alone off-grid control module.

The stand-alone off-grid control module is used to:
when the ESS is operating in a stand-alone off-grid mode, obtain a third given value of positive sequence voltage amplitude of the present PCS, a third given value of positive sequence phase of the present PCS, a third given value of D-axis negative sequence voltage of the present PCS and a third given value of Q-axis negative sequence voltage of the present PCS, wherein in the stand-alone off-grid mode, the present PCS is an only PCS in operation among all the PCSs of the ESS;
determine a fourth D-axis positive sequence current control amount and a fourth Q-axis positive sequence current control amount based on a repetitive control loop;
determine a third D-axis target control amount and a third Q-axis target control amount according to the third given value of positive sequence voltage amplitude, the third given value of positive sequence phase, the third given value of D-axis negative sequence voltage, the third given value of Q-axis negative sequence voltage, the fourth D-axis positive sequence current control amount, the fourth Q-axis positive sequence current control amount, the outer voltage loop and the inner current loop;
determine a third midpoint target control amount of the present PCS based on the DC bus midpoint control loop, where, in this embodiment, the present PCS is the master PCS, that is, the master PCS and the present PCS is the same PCS in this embodiment;
generate a third target waveform according to the third D-axis target control amount, the third Q-axis target control amount and the third midpoint target control amount; and
control the present PCS according to the third target waveform.

Figure 5 is a schematic diagram of a control device provided by an embodiment of the present disclosure. As shown in Figure 5, the control device 4 may include a processor 40 and a memory 41. Memory 41 is used to store a computer executable program 42. Processor 40 is used to invoke and execute program 42 stored in memory 41 to perform the steps in the embodiments of control method for an off-grid ESS, e.g., steps S101 to S105 shown in Figure 2. Or, Processor 40 is used to invoke and execute program 42 stored in memory 41 to implement the functions of the modules in the embodiments of control device, e.g., the functions of modules 31 to 35 shown in Figure 4.

Exemplarily, program 42 may be divided into one or more modules/units, and the one or more modules/units are stored in memory 41 and executed by processor 40 to implement the present disclosure. The one or more modules/units may be a series of computer program instruction segments capable of performing specific functions, and the instruction segments are used to describe the execution process of program 42 in control device 4. For example, program 42 may be divided into modules 31 to 35 shown in Figure 4.

The control device 4 may include, but is not limited to, processor 40 and memory 41. Those skilled in the art can understand that Figure 5 is only an example of control device 4, and does not constitute limitation to control device 4. The control device 4 may include more or less components than shown, some components combined, or different components, for example, the control device 4 may also include input and output devices, network access devices, buses and the like.

Processor 40 may be Central Processing Units (CPU), other general-purpose processors, Digital Signal Processors (DSP), Application Specific Integrated Circuits (ASIC), Field-Programmable Gate Arrays (FPGA), other programmable logic devices, discrete gates, transistor logic devices, discrete hardware components or the like. The general-purpose processors may be microprocessors, any conventional processors or the like.

Memory 41 may be internal storage units of the control device 4, such as hard disks or memories of the control device 4. Memory 41 may also be external storage devices of electronic device 4, such as plug-in hard disks, Smart Memory Cards (SMC), Secure Digital Cards (SD), flash cards and the like equipped on control device 4. Further, memory 41 may also include both internal storage units and external storage devices of the control device 4. Memory 41 is used to store program 42 and other programs and data required by control device 4. Memory 41 can also be used to temporarily store data that has been output or will be output.

Corresponding to the control device, the present disclosure also provides an ESS. In an embodiment, the ESS may include at least two PCSs and the control device mentioned above. The at least two PCSs are controlled by the control device.

The control device is used to, when the ESS is in off-grid state, make the ESS operate in the AC/ DC parallel off-grid mode through controlling the AC sides of the at least two PCSs (all the PCSs of the ESS) to be connected in parallel and the DC sides of all the PCSs of the ESS to be connected in parallel, make the ESS operate in the VSG parallel off-grid mode through controlling the AC sides of all the PCSs of the ESS to be connected in parallel and the DC sides of all the a PCSs of the ESS to be separate from each other, and make the ESS operate in the stand-alone off-grid mode through controlling that only one PCS of all the PCSs of the ESS is in operating(i.e., in an operating state).

The specific description of the ESS may refer to the relevant description in the aforementioned embodiments, and will not be repeated.

Those skilled in the art can clearly understand that, for the convenience and brevity of description, the division of the above-mentioned functional modules is only an example for illustration. In practical applications, the above-mentioned function can be completed by different functional units and modules as required, that is, the internal structure of the control device can be divided into different functional units or modules to complete all or part of the functions described above. One or more functional modules in the embodiments may be integrated into one processing unit, or each module may exist physically alone, or two or more modules may be integrated into one unit. The above-mentioned integrated units may be implemented in the form of hardware or software functional units. In addition, the specific names of the functional modules are only for the convenience of distinguishing from each other, and are not used to limit the protection scope of the present disclosure. For the specific operation process of the modules in the above-mentioned control device and ESS, reference may be made to the description of corresponding processes in the foregoing embodiments of control method, which will not be repeated.

In the above-mentioned embodiments, the description of each embodiment has its own emphasis. For parts that are not described or described in detail in a certain embodiment, reference may be made to the relevant descriptions of other embodiments.

Those skilled in the art can realize that the modules and algorithm steps in the embodiments of the present disclosure can be implemented in electronic hardware, or a combination of computer software and electronic hardware. Whether the functions of these modules and algorithm steps are performed in hardware or software depends on the specific application and design constraints of the technical solution. Those skilled in the art may implement the described functions using different methods for each particular application, which should not be considered beyond the scope of the present disclosure.

In the embodiments provided in the present disclosure, it should be understood that the disclosed control devices and methods may be implemented in other manners. For example, the control device in the embodiment described above are merely illustrative. For example, the division of the modules is only a logical function division, and there may be other division manners in actual implementations. For example, multiple units or components may be combined, or may be integrated into another system, or some features may be omitted or not implemented. Besides, the shown or discussed mutual coupling, direct coupling or communication connection may be implemented through some interfaces, indirect coupling or communication connection of devices or units, and may be in electrical, mechanical or other forms.

The units described as separate parts may or may not be physically separate. A component shown as a unit may or may not be a physical unit. It may be located in one place, or it may be distributed over a number of network elements. Some or all of the units may be selected according to actual needs to achieve the purpose of the solution of the embodiments of the present disclosure.

In addition, each functional unit in each embodiment of the present disclosure may be integrated into one processing unit, or each unit may exist physically alone, or two or more units may be integrated into one unit. The above-mentioned integrated units may be implemented in the form of hardware or software functional units.

The integrated modules/units, if implemented in the form of software functional units and sold or used as independent products, may be stored in a computer-readable storage medium. Based on this understanding, all or part of the processes in the above embodiments of the control methods of the present disclosure can be implemented by instructing relevant hardware through a computer program. The computer program can be stored in a computer-readable storage medium, and when executed by the processor, the computer program can implement the steps in the above-mentioned embodiments of the control method for an off-grid ESS. The computer program may include computer program code which may be in the form of source code, object code, executable file, some intermediate form or the like. The computer-readable medium may be: any entity or device capable of carrying the computer program code, recording mediums, U disks, removable hard disks, magnetic disks, optical disks, computer memories, Read-Only Memories (ROM), Random Access Memories (RAM), electric carrier signals, telecommunication signals and software distribution mediums or the like. It should be noted that what the computer-readable media can be may be determined according to the requirements of legislation and patent practice in the jurisdiction, for example, in some jurisdictions, according to legislation and patent practice, the computer-readable media cannot be electrical carrier signals and telecommunication signals.

The above-mentioned embodiments are only used to illustrate the technical solutions of the present disclosure, but not to limit them. Although the present disclosure has been described in detail with reference to the above-mentioned embodiments, those skilled in the art should understand that the technical solutions described in the foregoing embodiments can still be modified, or some technical features thereof can be equivalently replaced. However, these modifications or replacements do not make the essence of the corresponding technical solutions deviate from the scope of the technical solutions of the embodiments of the present disclosure, and should be included within the protection scope of the present claims.

## Claims

1. A control method for an off-grid energy storage system (ESS) comprising at least two power conversion systems (PCS), each of the at least two PCSs has a battery connected in series, wherein the control method comprises:
when the ESS is operating in an alternating current (AC)/direct current (DC) parallel off-grid mode, obtaining a first given value of positive sequence voltage amplitude of a present PCS to be controlled, a first given value of positive sequence phase of the present PCS, a first given value of D-axis negative sequence voltage of the present PCS and a first given value of Q-axis negative sequence voltage of the present PCS based on a first current sharing control loop, wherein the present PCS is any PCS in operation among the at least two PCSs, in the AC/DC parallel off-grid mode, AC sides of the at least two PCSs are connected in parallel and DC sides of the at least two PCSs are connected in parallel;
determining a first D-axis target control amount and a first Q-axis target control amount according to the first given value of positive sequence voltage amplitude, the first given value of positive sequence phase, the first given value of D-axis negative sequence voltage, the first given value of Q-axis negative sequence voltage, an outer voltage loop and an inner current loop;
determining a first zero-axis target control amount based on a zero-sequence current loop;
determining a first midpoint target control amount of a master PCS based on a DC bus midpoint control loop, wherein the master PCS is a PCS in operation among the at least two PCSs, leaving other PCSs in operation among the at least two PCSs are slave PCSs;
generating a first target waveform according to the first D-axis target control amount, the first Q-axis target control amount, the first zero-axis target control amount and the first midpoint target control amount; and
controlling the present PCS according to the first target waveform.

2. The control method of claim 1, **characterized in that** determining the first zero-axis target control amount based on the zero-sequence current loop comprises:
obtaining a sampling value of zero-sequence current of the present PCS;
calculating a difference between zero and the sampling value of zero-sequence current as a first difference;
inputting the first difference into a first preset controller to obtain a zero-sequence control amount; and
normalizing the zero-sequence control amount to obtain the first zero-axis target control amount.

3. The control method of claim 1, **characterized in that** obtaining the first given value of positive sequence voltage amplitude of the present PCS, the first given value of positive sequence phase of the present PCS, the first given value of D-axis negative sequence voltage of the present PCS and a first given value of Q-axis negative sequence voltage of the present PCS based on the first current sharing control loop comprises:
obtaining a positive sequence active current value of the present PCS, a positive sequence reactive current value of the present PCS, a negative sequence active current value of the present PCS and a negative sequence reactive current value of the present PCS;
obtaining a positive sequence active current average value of the ESS, a positive sequence reactive current average value of the ESS, a negative sequence active current average value of the ESS and a negative sequence reactive current average value of the ESS;
calculating a difference between the positive sequence active current value and the positive sequence active current average value as a second difference;
determining the first given value of positive sequence phase according to the second difference;
calculating a difference between the positive sequence reactive current value and the positive sequence reactive current average value as a third difference;
determining the first given value of positive sequence voltage amplitude according to the third difference;
calculating a difference between the negative sequence active current average value and the negative sequence active current value as a fourth difference;
determining the first given value of Q-axis negative sequence voltage according to the fourth difference;
calculating a difference between the negative sequence reactive current average value and the negative sequence reactive current value as a fifth difference; and
determining the first given value of D-axis negative sequence voltage according to the fifth difference.

4. The control method of claim 3, **characterized in that** calculating the difference between the positive sequence active current value and the positive sequence active current average value as the second difference and determining the first given value of positive sequence phase according to the second difference comprises:
taking the positive sequence active current average value from the positive sequence active current value to obtain the second difference;
inputting the second difference into a second preset controller to obtain a phase difference; and
obtaining the first given value of positive sequence phase according to the phase difference.

5. The control method of claim 1, **characterized in that** determining the first D-axis target control amount and the first Q-axis target control amount according to the first given value of positive sequence voltage amplitude, the first given value of positive sequence phase, the first given value of D-axis negative sequence voltage, the first given value of Q-axis negative sequence voltage, the outer voltage loop and the inner current loop comprises:
generating a first given value of D-axis positive sequence voltage of the present PCS and a first given value of Q-axis positive sequence voltage of the present PCS according to the first given value of positive sequence voltage amplitude and the first given value of positive sequence phase;
determining a control amount of DC component of D-axis of the present PCS and a control amount of DC component of Q-axis of the present PCS according to a loop of DC component of voltage and a loop of DC component of current;
obtaining a sampling value of D-axis positive sequence voltage of the present PCS and a sampling value of Q-axis positive sequence voltage of the present PCS;
determining a first D-axis positive sequence current control amount according to the first given value of D-axis positive sequence voltage, the control amount of DC component of D-axis, the sampling value of D-axis positive sequence voltage and a D-axis voltage loop;
determining a first Q-axis positive sequence current control amount according to the first given value of Q-axis positive sequence voltage, the control amount of DC component of Q-axis, the sampling value of Q-axis positive sequence voltage and a Q-axis voltage loop;
determining a second D-axis positive sequence current control amount and a second Q-axis positive sequence current control amount according to the first given value of D-axis negative sequence voltage, the first given value of Q-axis negative sequence voltage and a negative sequence control loop;
obtaining three current sampling values corresponding to three phases of the present PCS;
determining a sampling value of D-axis positive sequence current, a sampling value of Q-axis positive sequence current, a third D-axis positive sequence current control amount and a third Q-axis positive sequence current control amount according to the three current sampling values corresponding to three phases of the present PCS;
determining the first D-axis target control amount according to the first D-axis positive sequence current control amount, the second D-axis positive sequence current control amount, the third D-axis positive sequence current control amount, the sampling value of D-axis positive sequence current, the sampling value of D-axis positive sequence voltage and a D-axis current loop; and
determining the first Q-axis target control amount according to the first Q-axis positive sequence current control amount, the second Q-axis positive sequence current control amount, the third Q-axis positive sequence current control amount, the sampling value of Q-axis positive sequence current, the sampling value of Q-axis positive sequence voltage and a Q-axis current loop.

6. The control method of claim 5, **characterized in that** generating the first given value of D-axis positive sequence voltage of the present PCS and the first given value of Q-axis positive sequence voltage of the present PCS according to the first given value of positive sequence voltage amplitude and the first given value of positive sequence phase comprises:
generating a first given value of positive sequence voltage according to the first given value of positive sequence voltage amplitude and the first given value of positive sequence phase; and
performing a DQ coordinate transformation on the first given value of positive sequence voltage to obtain the first given value of D-axis positive sequence voltage of the present PCS and the first given value of Q-axis positive sequence voltage of the present PCS.

7. The control method of claim 1, **characterized in that** determining the first midpoint target control amount of the master PCS based on the DC bus midpoint control loop comprises:
obtaining a voltage difference between a positive DC bus of the master PCS and a negative DC bus of the master PCS;
calculating a difference between zero and the voltage difference to obtain a midpoint difference;
inputting the midpoint difference into a preset midpoint controller to obtain a value of the first midpoint target control amount;
obtaining a predetermined modulating voltage of the master PCS and an inductor current of the master PCS;
multiplying the predetermined modulating voltage by the inductor current to obtain a sign of a control amount as a sign of the first midpoint target control amount; and
obtaining the first midpoint target control amount according to the value of the first midpoint target control amount and the sign of the first midpoint target control amount.

8. The control method of claim 1, **characterized in that** in the AC/DC parallel off-grid mode, DC bus midpoints of the at least two PCSs are connected to each other.

9. The control method of claim 1, **characterized in that** when the ESS is operating in the AC/DC parallel off-grid mode, the control method further comprises:
performing a carrier synchronization control on the at least two PCSs through a Controller Area Network.

10. The control method of any one of claims 1 to 9, **characterized in that** the control method further comprises:
when the ESS is operating in a virtual synchronous generator (VSG) parallel off-grid mode, obtaining a second given value of positive sequence voltage amplitude of the present PCS, a second given value of positive sequence phase of the present PCS, a second given value of D-axis negative sequence voltage of the present PCS and a second given value of Q-axis negative sequence voltage of the present PCS based on a second current sharing control loop, wherein in the VSG parallel off-grid mode, AC sides of the at least two PCSs are connected in parallel and DC sides of the at least two PCSs are separate from each other;
determining a second D-axis target control amount and a second Q-axis target control amount according to the second given value of positive sequence voltage amplitude, the second given value of positive sequence phase, the second given value of D-axis negative sequence voltage, the second given value of Q-axis negative sequence voltage, the outer voltage loop and the inner current loop;
determining a second zero-axis target control amount based on the zero-sequence current loop;
determining a second midpoint target control amount of the present PCS based on the DC bus midpoint control loop;
generating a second target waveform according to the second D-axis target control amount, the second Q-axis target control amount, the second zero-axis target control amount and the second midpoint target control amount; and
controlling the present PCS according to the second target waveform.

11. The control method of claim 10, **characterized in that** obtaining the second given value of positive sequence voltage amplitude of the present PCS and the second given value of positive sequence phase of the present PCS based on the second current sharing control loop comprises:
obtaining a given value of active power of the present PCS and a sampling value of active power of the present PCS;
taking the sampling value of active power from the given value of active power to obtain a fourteenth difference;
multiplying the fourteenth difference by a first droop coefficient m to obtain an angular frequency difference;
adding a preset angular frequency to the angular frequency difference to obtain a given value of angular frequency;
performing a transformation on the given value of angular frequency to obtain the second given value of positive sequence phase;
obtaining a given value of reactive power of the present PCS and a sampling value of reactive power of the present PCS;
taking the sampling value of reactive power from the given value of reactive power to obtain a fifteenth difference;
multiplying the fifteenth difference by a second droop coefficient n to obtain a voltage amplitude difference; and
adding a preset voltage amplitude to the voltage amplitude difference to obtain the second given value of positive sequence voltage amplitude.

12. The control method of any one of claims 1 to 9, **characterized in that** the control method further comprises:
when the ESS is operating in a stand-alone off-grid mode, obtaining a third given value of positive sequence voltage amplitude of the present PCS, a third given value of positive sequence phase of the present PCS, a third given value of D-axis negative sequence voltage of the present PCS and a third given value of Q-axis negative sequence voltage of the present PCS, wherein in the stand-alone off-grid mode, the present PCS is an only PCS in operation among the at least two PCSs;
determining a fourth D-axis positive sequence current control amount and a fourth Q-axis positive sequence current control amount based on a repetitive control loop;
determining a third D-axis target control amount and a third Q-axis target control amount according to the third given value of positive sequence voltage amplitude, the third given value of positive sequence phase, the third given value of D-axis negative sequence voltage, the third given value of Q-axis negative sequence voltage, the fourth D-axis positive sequence current control amount, the fourth Q-axis positive sequence current control amount, the outer voltage loop and the inner current loop;
determining a third midpoint target control amount of the present PCS based on the DC bus midpoint control loop;
generating a third target waveform according to the third D-axis target control amount, the third Q-axis target control amount and the third midpoint target control amount; and
controlling the present PCS according to the third target waveform.

13. The control method of claim 12, **characterized in that** determining the fourth D-axis positive sequence current control amount and the fourth Q-axis positive sequence current control amount based on the repetitive control loop comprises:
obtaining a given value of D-axis voltage of the present PCS, a sampling value of D-axis voltage of the present PCS, a given value of Q-axis voltage of the present PCS and a sampling value of Q-axis voltage of the present PCS;
taking the sampling value of D-axis voltage from the given value of D-axis voltage to obtain a sixteenth difference;
inputting the sixteenth difference into a first preset repetitive controller to obtain the fourth D-axis positive sequence current control amount;
taking the sampling value of Q-axis voltage from the given value of Q-axis voltage to obtain a seventeenth difference; and
inputting the seventeenth difference into a second preset repetitive controller to obtain the fourth Q-axis positive sequence current control amount.

14. A control device (4) comprising a memory (41) configured to store a computer executable program and one or more processors (40), **characterized in that** when the computer executable program is executed by the one or more processors, any one of control methods of claims 1 to 13 is performed.

15. An energy storage system (ESS) comprising at least two power conversion systems (PCS), **characterized in that** the ESS comprises a control device (4) of claim 14, the at least two PCSs are controlled by the control device (4) and the control device is configured to, when the ESS is in an off-grid state:
make the ESS operate in an AC/ DC parallel off-grid mode through controlling AC sides of the at least two PCSs to be connected in parallel and DC sides of the at least two PCSs being connected in parallel;
make the ESS operate in an VSG parallel off-grid mode through controlling AC sides of the at least two PCSs to be connected in parallel and DC sides of the at least two PCSs to be separate from each other; and
make the ESS operate in a stand-alone off-grid mode through controlling that only one PCS of the at least two PCSs is in operation.

## Patentansprüche

1. Steuerverfahren für ein netzunabhängiges Energiespeichersystem (ESS), umfassend mindestens zwei Energieumwandlungssysteme (PCS), wobei jedes der mindestens zwei PCS eine in Reihe geschaltete Batterie aufweist, wobei das Steuerverfahren Folgendes umfasst:
wenn das ESS in einem parallelen netzunabhängigen Modus mit Wechselstrom (AC)/Gleichstrom (DC) arbeitet, einen ersten gegebenen Wert der Amplitude der positiven Sequenzspannung eines vorliegenden zu steuernden PCS erhält, einen ersten gegebenen Wert der positiven Sequenzphase des vorliegenden PCS erhält, einen ersten gegebenen Wert der negativen Sequenzspannung der D-Achse des vorliegenden PCS und einen ersten gegebenen Wert der negativen Sequenzspannung der Q-Achse des vorliegenden PCS basierend auf einer ersten Stromverteilungssteuerschleife, wobei das vorliegende PCS ein beliebiges PCS ist, das unter den mindestens zwei PCS in Betrieb ist, wobei in dem parallelen netzunabhängigen AC/DC-Modus die AC-Seiten der mindestens zwei PCS parallel geschaltet sind und die DC-Seiten der mindestens zwei PCS parallel geschaltet sind;
Bestimmen eines ersten D-Achsen-Zielsteuerungsbetrags und eines ersten Q-Achsen-Zielsteuerungsbetrags entsprechend dem ersten gegebenen Wert der positiven Sequenzspannungsamplitude, dem ersten gegebenen Wert der positiven Sequenzphase, dem ersten gegebenen Wert der negativen Sequenzspannung der D-Achse, dem ersten gegebenen Wert der negativen Sequenzspannung der Q-Achse, einer äußeren Spannungsschleife und einer inneren Stromschleife;
Bestimmen eines ersten Null-Achsen-Zielsteuerungsbetrags basierend auf einer Null-Sequenz-Stromschleife;
Bestimmen eines ersten Mittelwert-Zielsteuerungsbetrags eines Master-PCS basierend auf einer DC-Bus-Mittelwertsteuerungsschleife, wobei das Master-PCS ein PCS ist, das unter den mindestens zwei PCS in Betrieb ist, wobei andere PCS, die unter den mindestens zwei PCS in Betrieb sind, Slave-PCS sind;
Erzeugen einer ersten Zielwellenform entsprechend dem ersten D-Achsen-Zielsteuerungsbetrag, dem ersten Q-Achsen-Zielsteuerungsbetrag, dem ersten Null-Achsen-Zielsteuerungsbetrag und dem ersten Mittelpunkts-Zielsteuerungsbetrag; und
Steuern des vorliegenden PCS nach der ersten Zielwellenform.

2. Steuerverfahren nach Anspruch 1, **dadurch gekennzeichnet, dass** das Bestimmen des ersten Null-Achsen-Zielsteuerungsbetrags basierend auf der Null-Sequenz-Stromschleife Folgendes umfasst:
Erhalten eines Abtastwerts des Null-Sequenz-Stroms des vorliegenden PCS;
Berechnen einer Differenz zwischen Null und dem Abtastwert des Null-Sequenz-Stroms als eine erste Differenz;
Eingeben der ersten Differenz in eine erste voreingestellte Steuerung, um einen Null-Sequenz-Steuerbetrag zu erhalten; und
Normalisieren des Null-Sequenz-Steuerbetrags, um den ersten Null-Achsen-Zielsteuerbetrag zu erhalten.

3. Steuerverfahren nach Anspruch 1, **dadurch gekennzeichnet, dass** das Erhalten des ersten gegebenen Wertes der positiven Sequenzspannungsamplitude des vorliegenden PCS, des ersten gegebenen Wertes der positiven Sequenzphase des vorliegenden PCS, des ersten gegebenen Wertes der negativen D-Achsen-Sequenzspannung des vorliegenden PCS und eines ersten gegebenen Wertes der negativen Q-Achsen-Sequenzspannung des vorliegenden PCS auf der Basis des ersten Stromteilungsregelkreises Folgendes umfasst:
Erhalten eines positiven Sequenzwirkstromwertes des vorliegenden PCS, eines positiven Sequenzblindstromwertes des vorliegenden PCS, eines negativen Sequenzwirkstromwertes des vorliegenden PCS und eines negativen Sequenzblindstromwertes des vorliegenden PCS;
Erhalten eines positiven Sequenz-Wirkstrom-Durchschnittswerts des ESS, eines positiven Sequenz-Blindstrom-Durchschnittswerts des ESS, eines negativen Sequenz-Wirkstrom-Durchschnittswerts des ESS und eines negativen Sequenz-Blindstrom-Durchschnittswerts des ESS;
Berechnen einer Differenz zwischen dem positiven Sequenz-Wirkstromwert und dem positiven Sequenz-Wirkstrommittelwert als zweite Differenz;
Bestimmen des ersten vorgegebenen Wertes der positiven Sequenzphase nach der zweiten Differenz;
Berechnen einer Differenz zwischen dem positiven Sequenz-Blindstromwert und dem positiven Sequenz-Blindstrom-Durchschnittswert als eine dritte Differenz;
Bestimmen des ersten vorgegebenen Wertes der positiven Sequenzspannungsamplitude entsprechend der dritten Differenz;
Berechnen einer Differenz zwischen dem Durchschnittswert des Wirkstroms der negativen Sequenz und dem Wirkstrom der negativen Sequenz als vierte Differenz;
Bestimmen des ersten vorgegebenen Wertes der negativen Q-Achsen-Sequenzspannung nach der vierten Differenz;
Berechnen einer Differenz zwischen dem Durchschnittswert des Blindstroms der negativen Sequenz und dem Wert des Blindstroms der negativen Sequenz als fünfte Differenz; und
Bestimmen des ersten vorgegebenen Wertes der negativen D-Achsen-Sequenzspannung nach der fünften Differenz.

4. Steuerverfahren nach Anspruch 3, **dadurch gekennzeichnet, dass** das Berechnen der Differenz zwischen dem positiven Sequenz-Wirkstromwert und dem positiven Sequenz-Wirkstrom-Durchschnittswert als zweite Differenz und das Bestimmen des ersten vorgegebenen Wertes der positiven Sequenzphase nach der zweiten Differenz Folgendes umfasst:
Nehmen des Durchschnittswertes des Wirkstroms der positiven Sequenz vom Wirkstrom der positiven Sequenz, um die zweite Differenz zu erhalten;
Eingeben der zweiten Differenz in eine zweite voreingestellte Steuerung, um eine Phasendifferenz zu erhalten; und
Erhalten des ersten vorgegebenen Wertes der positiven Sequenzphase nach der Phasendifferenz.

5. Steuerverfahren nach Anspruch 1, **dadurch gekennzeichnet, dass** das Bestimmen des ersten D-Achsen-Zielsteuerungsbetrags und des ersten Q-Achsen-Zielsteuerungsbetrags nach dem ersten gegebenen Wert der Amplitude der positiven Sequenzspannung, dem ersten gegebenen Wert der positiven Sequenzphase, dem ersten gegebenen Wert der negativen D-Achsen-Sequenzspannung, dem ersten gegebenen Wert der negativen Q-Achsen-Sequenzspannung, der äußeren Spannungsschleife und der inneren Stromschleife Folgendes umfasst:
Erzeugen eines ersten vorgegebenen Wertes der positiven Sequenzspannung der D-Achse des vorliegenden PCS und eines ersten vorgegebenen Wertes der positiven Sequenzspannung der Q-Achse des vorliegenden PCS nach dem ersten vorgegebenen Wert der Amplitude der positiven Sequenzspannung und dem ersten vorgegebenen Wert der Phase der positiven Sequenz;
Bestimmen eines Steuerbetrags der DC-Komponente der D-Achse des vorliegenden PCS und eines Steuerbetrags der DC-Komponente der Q-Achse des vorliegenden PCS nach einer Schleife der DC-Komponente der Spannung und einer Schleife der DC-Komponente des Stroms;
Erhalten eines Abtastwerts der positiven D-Achsen-Sequenzspannung des vorliegenden PCS und eines Abtastwerts der positiven Q-Achsen-Sequenzspannung des vorliegenden PCS;
Bestimmen eines ersten Steuerbetrags für den Strom der D-Achse in positiver Sequenz nach dem ersten gegebenen Wert der positiven D-Achsen-Sequenzspannung, dem Steuerbetrag der DC-Komponente der D-Achse, dem Abtastwert der positiven D-Achsen-Sequenzspannung und einer D-Achsen-Spannungsschleife;
Bestimmen eines ersten Steuerbetrags für den Strom der Q-Achse in positiver Sequenz nach dem ersten gegebenen Wert der positiven Q-Achsen-Sequenzspannung, dem Steuerbetrag der DC-Komponente der Q-Achse, dem Abtastwert der positiven Q-Achsen-Sequenzspannung und einer Q-Achsen-Spannungsschleife;
Bestimmen eines zweiten Steuerbetrags für den Strom der D-Achse in positiver Sequenz und eines zweiten Steuerbetrags für den Strom der Q-Achse in positiver Sequenz entsprechend dem ersten gegebenen Wert der negativen D-Achsen-Sequenzspannung, dem ersten gegebenen Wert der negativen Q-Achsen-Sequenzspannung und einem negativen Sequenzsteuerungskreis;
Erhalten dreier Stromprobenwerte, die den drei Phasen des vorliegenden PCS entsprechen;
Bestimmen eines Abtastwerts des Stroms der positiven Sequenz der D-Achse, eines Abtastwerts des Stroms der positiven Sequenz der Q-Achse, eines dritten Steuerbetrags für den Strom der positiven Sequenz der D-Achse und eines dritten Steuerbetrags für den Strom der positiven Sequenz der Q-Achse entsprechend den drei Stromabtastwerten, die drei Phasen des vorliegenden PCS entsprechen;
Bestimmen des ersten D-Achsen-Zielsteuerungsbetrags nach dem Steuerbetrag für den ersten Strom der D-Achse in positiver Sequenz, dem Steuerbetrag für den zweiten Strom der D-Achse in positiver Sequenz, dem Steuerbetrag für den dritten Strom der D-Achse in positiver Sequenz, dem Abtastwert des Stroms der D-Achse in positiver Sequenz, dem Abtastwert der Spannung der D-Achse in positiver Sequenz und einer D-Achsen-Stromschleife; und
Bestimmen des ersten Q-Achsen-Zielsteuerungsbetrags nach dem Steuerbetrag für den ersten Strom der Q-Achse in positiver Sequenz, dem Steuerbetrag für den zweiten Strom der Q-Achse in positiver Sequenz, dem Steuerbetrag für den dritten Strom der Q-Achse in positiver Sequenz, dem Abtastwert des Stroms der Q-Achse in positiver Sequenz, dem Abtastwert der Spannung der Q-Achse in positiver Sequenz und einer Q-Achsen-Stromschleife.

6. Steuerverfahren nach Anspruch 5, **dadurch gekennzeichnet, dass** das Erzeugen des ersten vorgegebenen Wertes der positiven D-Achsen-Sequenzspannung des vorliegenden PCS und des ersten vorgegebenen Wertes der positiven Q-Achsen-Sequenzspannung des vorliegenden PCS nach dem ersten vorgegebenen Wert der positiven Sequenzspannungsamplitude und dem ersten vorgegebenen Wert der positiven Sequenzphase Folgendes umfasst:
Erzeugen eines ersten gegebenen Wertes der positiven Sequenzspannung entsprechend dem ersten gegebenen Wert der Amplitude der positiven Sequenzspannung und dem ersten gegebenen Wert der positiven Sequenzphase; und
Durchführen einer DQ-Koordinatentransformation an dem ersten gegebenen Wert der positiven Sequenzspannung, um den ersten gegebenen Wert der positiven Sequenzspannung der D-Achse des vorliegenden PCS und den ersten gegebenen Wert der positiven Sequenzspannung der Q-Achse des vorliegenden PCS zu erhalten.

7. Steuerverfahren nach Anspruch 1, **dadurch gekennzeichnet, dass** das Bestimmen des ersten Mittelwert-Zielsteuerungsbetrags des Master-PCS basierend auf dem DC-Bus-Mittelwertsteuerkreis Folgendes umfasst:
Erhalten einer Spannungsdifferenz zwischen einem positiven DC-Bus des Master-PCS und einem negativen DC-Bus des Master-PCS;
Berechnen einer Differenz zwischen Null und der Spannungsdifferenz, um eine Mittelwertdifferenz zu erhalten;
Eingeben der Mittelpunktsdifferenz in eine voreingestellte Mittelpunktssteuerung, um einen Wert für den ersten Mittelpunktszielsteuerungsbetrag zu erhalten;
Erhalten einer vorbestimmten Modulationsspannung des Master-PCS und eines Induktionsstroms des Master-PCS;
Multiplizieren der vorbestimmten Modulationsspannung mit dem Induktorstrom, um ein Vorzeichen eines Steuerbetrags als Vorzeichen des ersten Mittelwert-Zielsteuerbetrags zu erhalten; und
Erhalten des ersten Zielsteuerungsbetrags nach dem Wert des ersten Zielsteuerungsbetrags nach der Mitte und dem Vorzeichen des ersten Zielsteuerungsbetrags nach der Mitte.

8. Steuerverfahren nach Anspruch 1, **dadurch gekennzeichnet, dass** im netzunabhängigen AC/DC-Parallelbetrieb die DC-Bus-Mittelpunkte der mindestens zwei PCS miteinander verbunden sind.

9. Steuerverfahren nach Anspruch 1, **dadurch gekennzeichnet, dass** das Steuerverfahren ferner umfasst, wenn das ESS im netzunabhängigen AC/DC-Parallelmodus betrieben wird:
Durchführen einer Trägersynchronisationssteuerung auf den mindestens zwei PCS über ein Steuerbereichsnetzwerk.

10. Steuerverfahren nach einem der Ansprüche 1 bis 9,
**dadurch gekennzeichnet, dass** das Steuerverfahren ferner Folgendes umfasst:
wenn das ESS in einem parallelen netzunabhängigen Modus eines virtuellen Synchrongenerators (VSG) arbeitet, einen zweiten gegebenen Wert der Amplitude der positiven Sequenzspannung des vorliegenden PCS, einen zweiten gegebenen Wert der positiven Sequenzphase des vorliegenden PCS erhält, einen zweiten gegebenen Wert der negativen Sequenzspannung der D-Achse des vorliegenden PCS und einen zweiten gegebenen Wert der negativen Sequenzspannung der Q-Achse des vorliegenden PCS basierend auf einem zweiten Stromverteilungssteuerkreis, wobei in dem parallelen netzunabhängigen VSG-Modus die Wechselstromseiten der mindestens zwei PCS parallel geschaltet sind und die Gleichstromseiten der mindestens zwei PCS voneinander getrennt sind;
Bestimmen eines zweiten D-Achsen-Zielsteuerungsbetrages und eines zweiten Q-Achsen-Zielsteuerungsbetrages nach dem zweiten gegebenen Wert der Amplitude der positiven Sequenzspannung, dem zweiten gegebenen Wert der positiven Sequenzphase, dem zweiten gegebenen Wert der negativen Sequenzspannung der D-Achse, dem zweiten gegebenen Wert der negativen Sequenzspannung der Q-Achse, der äußeren Spannungsschleife und der inneren Stromschleife;
Bestimmen eines zweiten Null-Achsen-Zielsteuerungsbetrags basierend auf der Null-Sequenz-Stromschleife;
Bestimmen eines zweiten Mittelwert-Zielsteuerungsbetrags des vorliegenden PCS basierend auf dem DC-Bus-Mittelwertsteuerkreis;
Erzeugen einer zweiten Zielwellenform entsprechend dem zweiten D-Achsen-Zielsteuerungsbetrag, dem zweiten Q-Achsen-Zielsteuerungsbetrag, dem zweiten Null-Achsen-Zielsteuerungsbetrag und dem zweiten MittelpunktsZielsteuerungsbetrag; und
Steuern des vorliegenden PCS nach der zweiten Zielwellenform.

11. Steuerverfahren nach Anspruch 10, **dadurch gekennzeichnet, dass** das Erhalten des zweiten vorgegebenen Wertes der positiven Sequenzspannungsamplitude des vorliegenden PCS und des zweiten vorgegebenen Wertes der positiven Sequenzphase des vorliegenden PCS basierend auf dem zweiten Stromverteilungssteuerkreis Folgendes umfasst:
Erhalten eines gegebenen Wertes der Wirkleistung des vorliegenden PCS und eines Abtastwertes der Wirkleistung des vorliegenden PCS;
Nehmen des Probenwertes der Wirkleistung vom gegebenen Wert der Wirkleistung, um eine vierzehnte Differenz zu erhalten;
Multiplizieren der vierzehnten Differenz mit einem ersten Pufferkoeffizienten m, um eine Winkelfrequenzdifferenz zu erhalten;
Hinzufügen einer voreingestellten Winkelfrequenz zur Winkelfrequenzdifferenz, um einen bestimmten Wert der Winkelfrequenz zu erhalten;
Durchführen einer Transformation des gegebenen Wertes der Kreisfrequenz, um den zweiten gegebenen Wert der positiven Sequenzphase zu erhalten;
Erhalten eines gegebenen Wertes der Blindleistung des vorliegenden PCS und eines Probenwertes der Blindleistung des vorliegenden PCS;
Nehmen des Probenwertes der Blindleistung vom gegebenen Wert der Blindleistung, um eine fünfzehnte Differenz zu erhalten;
Multiplizieren der fünfzehnten Differenz mit einem zweiten Droop-Koeffizienten n, um eine Spannungsamplitudendifferenz zu erhalten; und
Hinzufügen einer voreingestellten Spannungsamplitude zu der Spannungsamplitudendifferenz, um den zweiten vorgegebenen Wert der positiven Sequenzspannungsamplitude zu erhalten.

12. Steuerverfahren nach einem der Ansprüche 1 bis 9,
**dadurch gekennzeichnet, dass** das Steuerverfahren ferner Folgendes umfasst:
wenn der ESS in einem netzunabhängigen Stand-Alone-Modus arbeitet, einen dritten gegebenen Wert der Amplitude der positiven Sequenzspannung des vorliegenden PCS, einen dritten gegebenen Wert der positiven Sequenzphase des vorliegenden PCS, einen dritten gegebenen Wert der negativen Sequenzspannung der D-Achse des vorliegenden PCS und einen dritten gegebenen Wert der negativen Sequenzspannung der Q-Achse des vorliegenden PCS erhält, wobei in dem netzunabhängigen Stand-Alone-Modus das vorliegende PCS ein einziges PCS in Betrieb unter den mindestens zwei PCS ist;
Bestimmen eines Steuerbetrags für den Strom der vierten D-Achse in positiver Sequenz und eines Steuerbetrags für den Strom der vierten Q-Achse in positiver Sequenz, basierend auf einem sich wiederholenden Steuerungskreis;
Bestimmen eines dritten D-Achsen-Zielsteuerungsbetrags und eines dritten Q-Achsen-Zielsteuerungsbetrags entsprechend dem dritten gegebenen Wert der positiven Sequenzspannungsamplitude, dem dritten gegebenen Wert der positiven Sequenzphase, dem dritten gegebenen Wert der negativen Sequenzspannung der D-Achse, dem dritten gegebenen Wert der negativen Sequenzspannung der Q-Achse, dem vierten Steuerbetrag für den Strom der D-Achse in der positiven Sequenz, dem vierten Steuerbetrag für den Strom der positiven Sequenz der Q-Achse, dem äußeren Spannungskreis und dem inneren Stromkreis;
Bestimmen eines dritten Mittelwert-Zielsteuerungsbetrags des vorliegenden PCS basierend auf dem DC-Bus-Mittelwertsteuerkreis;
Erzeugen einer dritten Zielwellenform entsprechend dem dritten D-Achsen-Zielsteuerungsbetrag, dem dritten Q-Achsen-Zielsteuerungsbetrag und dem dritten Mittelpunkt-Zielsteuerungsbetrag; und
Steuern des vorliegenden PCS nach der dritten Zielwellenform.

13. Steuerverfahren nach Anspruch 12, **dadurch gekennzeichnet, dass** das Bestimmen des Steuerbetrags für die vierte D-Achse in positiver Sequenz und des Steuerbetrags für die vierte Q-Achse in positiver Sequenz, basierend auf dem sich wiederholenden Steuerkreis, Folgendes umfasst:
Erhalten eines vorgegebenen Wertes der D-Achsen-Spannung des vorliegenden PCS, eines Abtastwertes der D-Achsen-Spannung des vorliegenden PCS, eines vorgegebenen Wertes der Q-Achsen-Spannung des vorliegenden PCS und eines Abtastwertes der Q-Achsen-Spannung des vorliegenden PCS;
Nehmen des Abtastwertes der D-Achsen-Spannung von dem gegebenen Wert der D-Achsen-Spannung, um eine sechzehnte Differenz zu erhalten;
Eingeben der sechzehnten Differenz in eine erste voreingestellte wiederholende Steuerung, um den vierten Steuerbetrag für die D-Achse in der positiven Sequenz zu erhalten;
Nehmen des Abtastwertes der Q-Achsen-Spannung von dem gegebenen Wert der Q-Achsen-Spannung, um eine siebzehnte Differenz zu erhalten; und
Eingeben der siebzehnten Differenz in eine zweite voreingestellte wiederholende Steuerung, um den vierten Steuerbetrag für die Q-Achse in der positiven Sequenz zu erhalten.

14. Steuervorrichtung (4), umfassend einen Speicher (41), der konfiguriert ist, um ein computerausführbares Programm zu speichern, und einen oder mehrere Prozessoren (40), **dadurch gekennzeichnet, dass,** wenn das computerausführbare Programm von dem einen oder den mehreren Prozessoren ausgeführt wird, eines der Steuerverfahren der Ansprüche 1 bis 13 durchgeführt wird.

15. Energiespeichersystem (ESS), umfassend mindestens zwei Energieumwandlungssysteme (PCS), **dadurch gekennzeichnet, dass** das ESS eine Steuervorrichtung (4) nach Anspruch 14 umfasst, wobei die mindestens zwei PCS von der Steuervorrichtung (4) gesteuert werden und die Steuervorrichtung konfiguriert ist, wenn sich das ESS in einem netzunabhängigen Zustand befindet, zum:
Bewirken, dass das ESS in einem netzunabhängigen AC/DC-Parallelbetrieb arbeitet, indem die AC-Seiten der mindestens zwei PCS parallel geschaltet werden und die DC-Seiten der mindestens zwei PCS parallel geschaltet werden;
Bewirken, dass das ESS in einem netzunabhängigen VSG-Parallelbetrieb arbeitet, indem es steuert, dass die Wechselstromseiten der mindestens zwei PCS parallel geschaltet werden und die Gleichstromseiten der mindestens zwei PCS voneinander getrennt werden; und
Bewirken, dass das ESS in einem netzunabhängigen Modus arbeitet, indem es steuert, dass nur ein PCS der mindestens zwei PCS in Betrieb ist.

## Revendications

1. Procédé de commande pour un système de stockage d'énergie (ESS) hors réseau comprenant au moins deux systèmes de conversion de puissance (PCS), chacun des au moins deux PCS a une batterie connectée en série, dans lequel le procédé de commande comprend :
lorsque l'ESS fonctionne dans un mode parallèle hors réseau en courant alternatif (CA)/courant continu (CC), l'obtention d'une première valeur donnée d'amplitude de tension de séquence positive d'un PCS actuel à commander, d'une première valeur donnée de phase de séquence positive du PCS actuel, d'une première valeur donnée de tension de séquence négative d'axe D du PCS actuel et d'une première valeur donnée de tension de séquence négative d'axe Q du PCS actuel sur la base d'une première boucle de commande de partage de courant, dans lequel le PCS actuel est un quelconque PCS en fonctionnement parmi les au moins deux PCS, dans le mode parallèle hors réseau CA/CC, des côtés CA des au moins deux PCS sont connectés en parallèle et des côtés CC des au moins deux PCS sont connectés en parallèle ;
la détermination d'une première quantité de commande cible d'axe D et d'une première quantité de commande cible d'axe Q selon la première valeur donnée d'amplitude de tension de séquence positive, la première valeur donnée de phase de séquence positive, la première valeur donnée de tension de séquence négative d'axe D, la première valeur donnée de tension de séquence négative d'axe Q, une boucle de tension externe et une boucle de courant interne ;
la détermination d'une première quantité de commande cible d'axe zéro sur la base d'une boucle de courant de séquence zéro ;
la détermination d'une première quantité de commande cible de point médian d'un PCS maître sur la base d'une boucle de commande de point médian de barre omnibus CC, dans lequel le PCS maître est un PCS en fonctionnement parmi les au moins deux PCS, laissant d'autres PCS en fonctionnement parmi les au moins deux PCS être des PCS esclaves ;
la génération d'une première forme d'onde cible selon la première quantité de commande cible d'axe D, la première quantité de commande cible d'axe Q, la première quantité de commande cible d'axe zéro et la première quantité de commande cible de point médian ; et
la commande du PCS actuel selon la première forme d'onde cible.

2. Procédé de commande selon la revendication 1, **caractérisé en ce que** la détermination de la première quantité de commande cible d'axe zéro sur la base de la boucle de courant de séquence zéro, comprend :
l'obtention d'une valeur d'échantillonnage de courant de séquence zéro du PCS actuel ;
le calcul d'une différence entre zéro et la valeur d'échantillonnage de courant de séquence zéro en tant que première différence ;
l'entrée de la première différence dans un premier dispositif de commande préréglé afin d'obtenir une quantité de commande de séquence zéro ; et
la normalisation de la quantité de commande de séquence zéro afin d'obtenir la première quantité de commande cible d'axe zéro.

3. Procédé de commande selon la revendication 1, **caractérisé en ce que** l'obtention de la première valeur donnée d'amplitude de tension de séquence positive du PCS actuel, de la première valeur donnée de phase de séquence positive du PCS actuel, de la première valeur donnée de tension de séquence négative d'axe D du PCS actuel et d'une première valeur donnée de tension de séquence négative d'axe Q du PCS actuel sur la base de la première boucle de commande de partage de courant, comprend :
l'obtention d'une valeur de courant actif de séquence positive du PCS actuel, d'une valeur de courant réactif de séquence positive du PCS actuel, d'une valeur de courant actif de séquence négative du PCS actuel et d'une valeur de courant réactif de séquence négative du PCS actuel ;
l'obtention d'une valeur moyenne de courant actif de séquence positive de l'ESS, d'une valeur moyenne de courant réactif de séquence positive de l'ESS, d'une valeur moyenne de courant actif de séquence négative de l'ESS et d'une valeur moyenne de courant réactif de séquence négative de l'ESS ;
le calcul d'une différence entre la valeur de courant actif de séquence positive et la valeur moyenne de courant actif de séquence positive en tant que deuxième différence ;
la détermination de la première valeur donnée de phase de séquence positive selon la deuxième différence ;
le calcul d'une différence entre la valeur de courant réactif de séquence positive et la valeur moyenne de courant réactif de séquence positive en tant que troisième différence ;
la détermination de la première valeur donnée d'amplitude de tension de séquence positive selon la troisième différence ;
le calcul d'une différence entre la valeur moyenne de courant actif de séquence négative et la valeur de courant actif de séquence négative en tant que quatrième différence ;
la détermination de la première valeur donnée de tension de séquence négative d'axe Q selon la quatrième différence ;
le calcul d'une différence entre la valeur moyenne de courant réactif de séquence négative et la valeur de courant réactif de séquence négative en tant que cinquième différence ; et
la détermination de la première valeur donnée de tension de séquence négative d'axe D selon la cinquième différence.

4. Procédé de commande selon la revendication 3, **caractérisé en ce que** le calcul de la différence entre la valeur de courant actif de séquence positive et la valeur moyenne de courant actif de séquence positive en tant que deuxième différence et la détermination de la première valeur donnée de phase de séquence positive selon la deuxième différence, comprennent :
le fait de prendre la valeur moyenne de courant actif de séquence positive à partir de la valeur de courant actif de séquence positive afin d'obtenir la deuxième différence ;
l'entrée de la deuxième différence dans un second dispositif de commande préréglé afin d'obtenir une différence de phase ; et
l'obtention de la première valeur donnée de phase de séquence positive selon la différence de phase.

5. Procédé de commande selon la revendication 1, **caractérisé en ce que** la détermination de la première quantité de commande cible d'axe D et de la première quantité de commande cible d'axe Q selon la première valeur donnée d'amplitude de tension de séquence positive, la première valeur donnée de phase de séquence positive, la première valeur donnée de tension de séquence négative d'axe D, la première valeur donnée de tension de séquence négative d'axe Q, la boucle de tension externe et la boucle de courant interne, comprend :
la génération d'une première valeur donnée de tension de séquence positive d'axe D du PCS actuel et d'une première valeur donnée de tension de séquence positive d'axe Q du PCS actuel selon la première valeur donnée d'amplitude de tension de séquence positive et la première valeur donnée de phase de séquence positive ;
la détermination d'une quantité de commande de composante CC d'axe D du PCS actuel et d'une quantité de commande de composante CC d'axe Q du PCS actuel selon une boucle de composante CC de tension et une boucle de composante CC de courant ;
l'obtention d'une valeur d'échantillonnage de tension de séquence positive d'axe D du PCS actuel et d'une valeur d'échantillonnage de tension de séquence positive d'axe Q du PCS actuel ;
la détermination d'une première quantité de commande de courant de séquence positive d'axe D selon la première valeur donnée de tension de séquence positive d'axe D, la quantité de commande de composante CC d'axe D, la valeur d'échantillonnage de tension de séquence positive d'axe D et une boucle de tension d'axe D ;
la détermination d'une première quantité de commande de courant de séquence positive d'axe Q selon la première valeur donnée de tension de séquence positive d'axe Q, la quantité de commande de composante CC d'axe Q, la valeur d'échantillonnage de tension de séquence positive d'axe Q et une boucle de tension d'axe Q ;
la détermination d'une deuxième quantité de commande de courant de séquence positive d'axe D et d'une deuxième quantité de commande de courant de séquence positive d'axe Q selon la première valeur donnée de tension de séquence négative d'axe D, la première valeur donnée de tension de séquence négative d'axe Q et une boucle de commande de séquence négative ;
l'obtention de trois valeurs d'échantillonnage de courant correspondant à trois phases du PCS actuel ;
la détermination d'une valeur d'échantillonnage de courant de séquence positive d'axe D, d'une valeur d'échantillonnage de courant de séquence positive d'axe Q, d'une troisième quantité de commande de courant de séquence positive d'axe D et d'une troisième quantité de commande de courant de séquence positive d'axe Q selon les trois valeurs d'échantillonnage de courant correspondant à trois phases du PCS actuel ;
la détermination de la première quantité de commande cible d'axe D selon la première quantité de commande de courant de séquence positive d'axe D, la deuxième quantité de commande de courant de séquence positive d'axe D, la troisième quantité de commande de courant de séquence positive d'axe D, la valeur d'échantillonnage de courant de séquence positive d'axe D, la valeur d'échantillonnage de tension de séquence positive d'axe D et une boucle de courant d'axe D ; et
la détermination de la première quantité de commande cible d'axe Q selon la première quantité de commande de courant de séquence positive d'axe Q, la deuxième quantité de commande de courant de séquence positive d'axe Q, la troisième quantité de commande de courant de séquence positive d'axe Q, la valeur d'échantillonnage de courant de séquence positive d'axe Q, la valeur d'échantillonnage de tension de séquence positive d'axe Q et une boucle de courant d'axe Q.

6. Procédé de commande selon la revendication 5, **caractérisé en ce que** la génération de la première valeur donnée de tension de séquence positive d'axe D du PCS actuel et de la première valeur donnée de tension de séquence positive d'axe Q du PCS actuel selon la première valeur donnée d'amplitude de tension de séquence positive et la première valeur donnée de phase de séquence positive, comprend :
la génération d'une première valeur donnée de tension de séquence positive selon la première valeur donnée d'amplitude de tension de séquence positive et la première valeur donnée de phase de séquence positive ; et
la réalisation d'une transformation de coordonnées DQ sur la première valeur donnée de tension de séquence positive afin d'obtenir la première valeur donnée de tension de séquence positive d'axe D du PCS actuel et la première valeur donnée de tension de séquence positive d'axe Q du PCS actuel.

7. Procédé de commande selon la revendication 1, **caractérisé en ce que** la détermination de la première quantité de commande cible de point médian du PCS maître sur la base de la boucle de commande de point médian de barre omnibus CC, comprend :
l'obtention d'une différence de tension entre une barre omnibus CC positive du PCS maître et une barre omnibus CC négative du PCS maître ;
le calcul d'une différence entre zéro et la différence de tension afin d'obtenir une différence de point médian ;
l'entrée de la différence de point médian dans un dispositif de commande de point médian préréglé afin d'obtenir une valeur de la première quantité de commande cible de point médian ;
l'obtention d'une tension de modulation prédéterminée du PCS maître et d'un courant inducteur du PCS maître ;
la multiplication de la tension de modulation prédéterminée par le courant inducteur afin d'obtenir un signe d'une quantité de commande en tant que signe de la première quantité de commande cible de point médian ; et
l'obtention de la première quantité de commande cible de point médian selon la valeur de la première quantité de commande cible de point médian et le signe de la première quantité de commande cible de point médian.

8. Procédé de commande selon la revendication 1, **caractérisé en ce que,** dans le mode parallèle hors réseau CA/CC, des points médians de barre omnibus CC des au moins deux PCS sont connectés les uns aux autres.

9. Procédé de commande selon la revendication 1, **caractérisé en ce que,** lorsque l'ESS fonctionne dans le mode parallèle hors réseau CA/CC, le procédé de commande comprend en outre :
la réalisation d'une commande de synchronisation de porteuse sur les au moins deux PCS par le biais d'un réseau local de commande.

10. Procédé de commande selon l'une quelconque des revendications 1 à 9, **caractérisé en ce que** le procédé de commande comprend en outre :
lorsque l'ESS fonctionne dans un mode parallèle hors réseau de générateur synchrone virtuel (VSG), l'obtention d'une deuxième valeur donnée d'amplitude de tension de séquence positive du PCS actuel, d'une deuxième valeur donnée de phase de séquence positive du PCS actuel, d'une deuxième valeur donnée de tension de séquence négative d'axe D du PCS actuel et d'une deuxième valeur donnée de tension de séquence négative d'axe Q du PCS actuel sur la base d'une seconde boucle de commande de partage de courant, dans lequel, dans le mode parallèle hors réseau de VSG, des côtés CA des au moins deux PCS sont connectés en parallèle et des côtés CC des au moins deux PCS sont séparés les uns des autres ;
la détermination d'une deuxième quantité de commande cible d'axe D et d'une deuxième quantité de commande cible d'axe Q selon la deuxième valeur donnée d'amplitude de tension de séquence positive, la deuxième valeur donnée de phase de séquence positive, la deuxième valeur donnée de tension de séquence négative d'axe D, la deuxième valeur donnée de tension de séquence négative d'axe Q, la boucle de tension externe et la boucle de courant interne ;
la détermination d'une deuxième quantité de commande cible d'axe zéro sur la base de la boucle de courant de séquence zéro ;
la détermination d'une deuxième quantité de commande cible de point médian du PCS actuel sur la base de la boucle de commande de point médian de barre omnibus CC ;
la génération d'une deuxième forme d'onde cible selon la deuxième quantité de commande cible d'axe D, la deuxième quantité de commande cible d'axe Q, la deuxième quantité de commande cible d'axe zéro et la deuxième quantité de commande cible de point médian ; et
la commande du PCS actuel selon la deuxième forme d'onde cible.

11. Procédé de commande selon la revendication 10, **caractérisé en ce que** l'obtention de la deuxième valeur donnée d'amplitude de tension de séquence positive du PCS actuel et de la deuxième valeur donnée de phase de séquence positive du PCS actuel sur la base de la seconde boucle de commande de partage de courant, comprend :
l'obtention d'une valeur donnée de puissance active du PCS actuel et d'une valeur d'échantillonnage de puissance active du PCS actuel ;
le fait de prendre la valeur d'échantillonnage de puissance active à partir de la valeur donnée de puissance active afin d'obtenir une quatorzième différence ;
la multiplication de la quatorzième différence par un premier coefficient de chute m afin d'obtenir une différence de fréquence angulaire ;
l'ajout d'une fréquence angulaire préréglée à la différence de fréquence angulaire afin d'obtenir une valeur donnée de fréquence angulaire ;
la réalisation d'une transformation sur la valeur donnée de fréquence angulaire afin d'obtenir la deuxième valeur donnée de phase de séquence positive ;
l'obtention d'une valeur donnée de puissance réactive du PCS actuel et d'une valeur d'échantillonnage de puissance réactive du PCS actuel ;
le fait de prendre la valeur d'échantillonnage de puissance réactive à partir de la valeur donnée de puissance réactive afin d'obtenir une quinzième différence ;
la multiplication de la quinzième différence par un second coefficient de chute n afin d'obtenir une différence d'amplitude de tension ; et
l'ajout d'une amplitude de tension préréglée à la différence d'amplitude de tension afin d'obtenir la deuxième valeur donnée d'amplitude de tension de séquence positive.

12. Procédé de commande selon l'une quelconque des revendications 1 à 9, **caractérisé en ce que** le procédé de commande comprend en outre :
lorsque l'ESS fonctionne dans un mode autonome hors réseau, l'obtention d'une troisième valeur donnée d'amplitude de tension de séquence positive du PCS actuel, d'une troisième valeur donnée de phase de séquence positive du PCS actuel, d'une troisième valeur donnée de tension de séquence négative d'axe D du PCS actuel et d'une troisième valeur donnée de tension de séquence négative d'axe Q du PCS actuel, dans lequel, dans le mode autonome hors réseau, le PCS actuel est un seul PCS en fonctionnement parmi les au moins deux PCS ;
la détermination d'une quatrième quantité de commande de courant de séquence positive d'axe D et d'une quatrième quantité de commande de courant de séquence positive d'axe Q sur la base d'une boucle de commande répétitive ;
la détermination d'une troisième quantité de commande cible d'axe D et d'une troisième quantité de commande cible d'axe Q selon la troisième valeur donnée d'amplitude de tension de séquence positive, la troisième valeur donnée de phase de séquence positive, la troisième valeur donnée de tension de séquence négative d'axe D, la troisième valeur donnée de tension de séquence négative d'axe Q, la quatrième quantité de commande de courant de séquence positive d'axe D, la quatrième quantité de commande de courant de séquence positive d'axe Q, la boucle de tension externe et la boucle de courant interne ;
la détermination d'une troisième quantité de commande cible de point médian du PCS actuel sur la base de la boucle de commande de point médian de barre omnibus CC ;
la génération d'une troisième forme d'onde cible selon la troisième quantité de commande cible d'axe D, la troisième quantité de commande cible d'axe Q et la troisième quantité de commande cible de point médian ; et
la commande du PCS actuel selon la troisième forme d'onde cible.

13. Procédé de commande selon la revendication 12, **caractérisé en ce que** la détermination de la quatrième quantité de commande de courant de séquence positive d'axe D et de la quatrième quantité de commande de courant de séquence positive d'axe Q sur la base de la boucle de commande répétitive, comprend :
l'obtention d'une valeur donnée de tension d'axe D du PCS actuel, d'une valeur d'échantillonnage de tension d'axe D du PCS actuel, d'une valeur donnée de tension d'axe Q du PCS actuel et d'une valeur d'échantillonnage de tension d'axe Q du PCS actuel ;
le fait de prendre la valeur d'échantillonnage de tension d'axe D à partir de la valeur donnée de tension d'axe D afin d'obtenir une seizième différence ;
l'entrée de la seizième différence dans un premier dispositif de commande répétitif préréglé afin d'obtenir la quatrième quantité de commande de courant de séquence positive d'axe D ;
le fait de prendre la valeur d'échantillonnage de tension d'axe Q à partir de la valeur donnée de tension d'axe Q afin d'obtenir une dix-septième différence ; et
l'entrée de la dix-septième différence dans un second dispositif de commande répétitif préréglé afin d'obtenir la quatrième quantité de commande de courant de séquence positive d'axe Q.

14. Dispositif de commande (4) comprenant une mémoire (41) configurée pour stocker un programme exécutable par ordinateur et un ou plusieurs processeurs (40), **caractérisé en ce que,** lorsque le programme exécutable par ordinateur est exécuté par le ou les processeurs, l'un quelconque des procédés de commande selon les revendications 1 à 13 est effectué.

15. Système de stockage d'énergie (ESS) comprenant au moins deux systèmes de conversion de puissance (PCS), **caractérisé en ce que** l'ESS comprend un dispositif de commande (4) selon la revendication 14, les au moins deux PCS sont commandés par le dispositif de commande (4) et le dispositif de commande est configuré pour, lorsque l'ESS est dans un état hors réseau :
faire fonctionner l'ESS dans un mode parallèle hors réseau CA/CC en commandant des côtés CA des au moins deux PCS pour qu'ils soient connectés en parallèle et des côtés CC des au moins deux PCS qui sont connectés en parallèle ;
faire fonctionner l'ESS dans un mode parallèle hors réseau de VSG en commandant des côtés CA des au moins deux PCS pour qu'ils soient connectés en parallèle et des côtés CC des au moins deux PCS pour qu'ils soient séparés les uns des autres ; et
faire fonctionner l'ESS dans un mode autonome hors réseau en commandant qu'un seul PCS parmi les au moins deux PCS est en fonctionnement.
